# EUROPÄISCHE PATENTANMELDUNG

(11) **EP 4 385 949 A1**
(43) Veröffentlichungstag der Anmeldung: **19.06.2024**
(21) Anmeldenummer: 23189694.5
(22) Anmeldetag: 04.08.2023
(51) Int. Cl.: C01D 1/04

(54) **VERFAHREN UND SYSTEM ZUR NATRIUMCARBONATHERSTELLUNG**

(30) Priorität: 05.08.2022 DE 102022119806
(71) Anmelder: Metaliq GmbH, 02826 Görlitz (DE)
(72) Erfinder: Werner, Hans-Ullrich, 09439 Amtsberg (DE)
(74) Vertreter: Weickmann & Weickmann PartmbB

(57) **Zusammenfassung**

Die vorliegende Erfindung liegt auf dem Gebiet der nachhaltigen Herstellung von Rohstoffen für die verarbeitende Industrie. Insbesondere betrifft die Erfindung ein Verfahren und ein System zur Herstellung von Natriumcarbonat und ggf. Natriumsulfat und/oder Natriumsulfit, ein Verfahren zur Reduktion von CO₂-Emissionen und ggf. SOₓ-Emissionen eines Abgasstroms, wie etwa eines Rauchgasstroms großtechnischer Anlagen. Eine beispielhafte Anwendung des erfindungsgemäßen Verfahrens liegt in der Reduktion von CO₂-Emissionen in der Glasherstellung.

## Beschreibung

### Gebiet der Erfindung

Die vorliegende Erfindung liegt auf dem Gebiet der nachhaltigen Herstellung von Rohstoffen für die verarbeitende Industrie. Insbesondere betrifft die Erfindung ein Verfahren und ein System zur Herstellung von Natriumcarbonat und ggf. Natriumsulfat und/oder Natriumsulfit, sowie ein Verfahren zur Reduktion von CO₂-Emissionen und ggf. SOₓ-Emissionen eines Abgasstroms, wie etwa eines Rauchgasstroms großtechnischer Anlagen. Eine beispielhafte Anwendung des erfindungsgemäßen Verfahrens liegt in der Reduktion von CO₂-Emissionen in der Glasherstellung.

### Hintergrund der Erfindung

Auf dem Pariser Klimaabkommen von 2015 haben sich die teilnehmenden Länder darauf geeinigt, Maßnahmen zu ergreifen, die sicherstellen, dass die globale Durchschnittstemperatur nicht um mehr als 1,5 °C im Vergleich zum vorindustriellen Niveau ansteigt. Um die Treibhausgasreduktionsziele zu erreichen, stellen die energieintensiven Industrien (EII) eine große Herausforderung dar, da sie kapitalintensiv, sehr wettbewerbsfähig und empfindlich auf die Produktqualität reagieren. Die Glasindustrie ist ein Teil dieser energieintensiven Industrien. Bei der Glasherstellung wird der größte Teil der verbrauchten Energie für die hohen Temperaturen benötigt, die zum Schmelzen der zu verwendenden Rohstoffe erforderlich sind, und der Großteil der bei der Glasherstellung verbrauchten Energie stammt aus der Verbrennung von Erdgas.

Aus wirtschaftlicher Sicht werden die Preise für fossile Brennstoffe unkontrollierbar teurer, insbesondere nach den Wirtschafts-, Gesundheits- und Kriegskrisen des letzten Jahrzehnts. Das Verbot von russischem Öl und Gas durch die EU-Länder führte im März 2022 zu einem sprunghaften Anstieg der Energiekosten. Die Prognose zeigt, dass die Preise weiter steigen werden. Für die Glasindustrie würden im Falle eines Engpasses bei der Erdgasversorgung irreversible Schäden an den Anlagen entstehen, und der Wiederaufbau würde mehrere Monate oder sogar Jahre dauern.

Die Abhängigkeit von Erdgas kann (zumindest teilweise) durch seine Substitution durch CO₂-neutrale Brennstoffe wie Biogas, synthetisches Methan oder grünen Wasserstoff bekämpft werden. Die überwiegende Mehrheit des heute auf dem Markt befindlichen Wasserstoffs ist grauer Wasserstoff, der aus Erdgas oder Methan durch ein Verfahren namens "Dampfreformierung" gewonnen wird. Gleichzeitig sollte der Wasserstoff zu erschwinglichen Preisen vermarktet werden, damit die Unternehmen wettbewerbsfähig bleiben.

Bei den Rohstoffen für die Glasherstellung werden Flussmittel wie Natriumcarbonat (Soda; Na₂CO₃) zugesetzt, um die Schmelztemperatur des Gemisches aus Kalkstein und Sand zu senken. Natriumcarbonat reagiert während des Glasherstellungsprozesses zu Natriumoxid (Na₂O) und setzt dabei auch eine gewisse Menge CO₂ frei. Auch Natriumsulfat (Glaubersalz, Na₂SO₄) und Natriumsulfit (Na₂SO₃) spielen als Läuterungsmittel und Glaszusatz für bestimmte Gläser, beispielsweise Kalknatronglas eine Rolle. Ein Teil des Schwefels aus dem Natriumsulfat/Natriumsulfit verlässt den Glasschmelzofen in Form von Schwefeloxiden (SOₓ), beispielsweise als SO₂ oder SO₃.

Im ersten Quartal des Jahres 2022 stiegen die Preise für Soda in Europa an, weil die Produktionskosten auf dem europäischen Markt als Reaktion auf die steigenden Energiepreise seit dem Ausbruch des Krieges zwischen Russland und der Ukraine gestiegen sind.

Die Preise für dichte Soda und leichte Soda in Deutschland wurden im März auf 507 USD/MT bzw. 476 USD/MT auf FOB Hamburg-Basis geschätzt (ChemAnalyst, 2022). Obwohl sie nur etwa 13 Gewichts-% der gesamten Rohstoffzusammensetzung ausmacht, ist Soda ein Schlüsselmaterial, das für etwa 70 % der Rohstoffkosten verantwortlich ist (Zier et al., 2021).

Ähnlich wie die Energiepreise haben auch die CO₂-Emissionsrechtekosten (EDCs) eine ähnliche Dynamik entwickelt, die durch das Ziel der vollständigen europäischen Dekarbonisierung (im Rahmen des europäischen Green Deal) noch weiter vorangetrieben wird. Während die EDCs im Zeitraum 2012-2017 stabil unter 10 €/T blieben, begannen sie danach zu steigen, von 16 €/T (2018) auf 25 €/T (2019), 35 €/T (2020) und bis zu 71 €/T (2021), um den aktuellen Stand von 83 €/T (erstes Quartal 2022) zu erreichen. Auch die Prognosen sind alles andere als schmeichelhaft: Sie gehen von einer Preisspanne von 70-110 €/T (2025) aus, die kontinuierlich auf 85-180 €/T (2030) ansteigt.

Die Glasherstellung ist eine energieintensive Industrie, die eine ununterbrochene Energieversorgung für das Schmelzen der Rohstoffe benötigt. Der überwiegende Teil dieser Energie wird aus Erdgas gewonnen. Die ökologischen Nachteile der Verbrennung dieses fossilen Brennstoffs sind bekannt: Emissionen von Kohlendioxid (CO₂), Kohlenmonoxid (CO), Stickstoffoxiden (NOx) und Schwefeloxiden (SOₓ) wie Schwefeldioxid (SO₂) und Schwefeltrioxid (SOs), und andere, die zur globalen Erwärmung beitragen. Außerdem drohte in den letzten Monaten aus geopolitischen Gründen eine ernsthafte Verknappung des Erdgases, abgesehen von einem noch nie dagewesenen Anstieg seines Preises. Der starke Preisanstieg auf den Kohle- und Erdgasmärkten hat sich auf eine Vielzahl von Rohstoffen wie Natriumcarbonat ausgewirkt. Parallel zum globalen Trend steigender Preise für Rohstoffe, fossile Brennstoffe und Gütertransport sind die Kosten für CO₂ Emissionsrechte (CDE) einem ähnlichen Trend gefolgt, der durch das europäische Ziel der Dekarbonisierung (verankert im Europäischen Grünen Pakt oder "Green Deal") noch weiter vorangetrieben wird.

### Kurze Zusammenfassung der Erfindung

Vor diesem Hintergrund war es ein Ziel der vorliegenden Erfindung, eine innovative Möglichkeit zu schaffen, Energieerzeugung und Kohlenstoffabscheidung miteinander zu kombinieren. Beispielsweise soll damit energieintensiven Industrien eine Gelegenheit zur schrittweisen Weiterentwicklung und Einstellung auf neue wirtschaftliche und klimapolitisch motivierte Rahmenbedingungen gegeben werden.

Ein weiteres Ziel war, insbesondere für die Glasindustrie eine Möglichkeit zu schaffen, künftig signifikant CO₂- und gegebenenfalls auch SOₓ-Emissionen zu reduzieren, insbesondere solche, die materialbedingt sind.

Diese Ziele werden durch die in den Ansprüchen definierte Erfindung erreicht.

Entsprechend bezieht sich die Erfindung in einem ersten Aspekt auf ein Verfahren zur Herstellung von Natriumcarbonat, umfassend die Schritte:
i. Bereitstellen von elementarem Natrium (Na) in einem ersten Behälter;
ii. Inkontaktbringen des Natriums mit Wasser;
iii. Abtrennen des in Schritt ii. entstandenen gasförmigen elementaren Wasserstoffs (H₂);
iv. Überführen des abgetrennten gasförmigen Wasserstoffs in einen geeigneten Auffangbehälter;
v. Überführen der verbleibenden Zusammensetzung aus dem ersten Behälter in mindestens einen weiteren Behälter und gegebenenfalls Abtrennen des in Schritt ii. entstandenen Natriumhydroxids (NaOH);
vi. Inkontaktbringen des Natriumhydroxids mit Kohlenstoffdioxid (CO₂);
vii. Abtrennen und Filtrieren des entstehenden Natriumcarbonats; und
viii. Kristallisation und/oder Trocknen des Natriumcarbonats.

In einem weiteren Aspekt bezieht sich die Erfindung auf ein Verfahren zur Herstellung von Natriumcarbonat und Natriumsulfat und/oder Natriumsulfit, umfassend die Schritte:
i. Bereitstellen von elementarem Natrium (Na) in einem ersten Behälter;
ii. Inkontaktbringen des Natriums mit Wasser;
iii. Abtrennen des in Schritt ii. entstandenen gasförmigen elementaren Wasserstoffs (H₂);
iv. Überführen des abgetrennten gasförmigen Wasserstoffs in einen geeigneten Auffangbehälter;
v. Überführen der verbleibenden Zusammensetzung aus dem ersten Behälter in mindestens einen weiteren Behälter und gegebenenfalls Abtrennen des in Schritt ii. entstandenen Natriumhydroxids (NaOH);
vi. Inkontaktbringen des Natriumhydroxids mit Kohlenstoffdioxid (CO₂) und Schwefeloxiden (SOₓ);
vii. Abtrennen und Filtrieren des entstehenden Natriumcarbonats und des entstehenden Natriumsulfats und/oder Natriumsulfits; und
viii. Kristallisation und/oder Trocknen des Natriumcarbonats und des Natriumsulfats und/oder Natriumsulfits.

In einem weiteren Aspekt bezieht sich die Erfindung auf ein System zur Herstellung von Natriumcarbonat aus elementarem Natrium, umfassend die untereinander verbundenen Module Lagerbereich, Reaktionsbereich, Gasaufbereitungsbereich und Carbonataufbereitungsbereich.

In einem weiteren Aspekt bezieht sich die Erfindung auf ein System zur Herstellung von Natriumcarbonat und Natriumsulfat und/oder Natriumsulfit aus elementarem Natrium, umfassend die untereinander verbundenen Module Lagerbereich, Reaktionsbereich, Gasaufbereitungsbereich und Carbonataufbereitungsbereich.

In noch einem weiteren Aspekt bezieht sich die Erfindung auf ein Verfahren zur CO₂-neutralen oder CO₂-negativen Herstellung von Natriumcarbonat aus Natriumhydroxid in einer großtechnischen Anlage, umfassend die Schritte:
i. Inkontaktbringen von Natriumhydroxid (NaOH) mit Kohlenstoffdioxid (CO₂) in einem Reaktor;
ii. Abtrennen und Filtrieren des entstehenden Natriumcarbonats; und
iii. Kristallisation und/oder Trocknen des Natriumcarbonats;
dadurch gekennzeichnet, dass das Natriumhydroxid (a) bereits in verwertbarer Form vorliegt oder (b) in derselben Anlage aus elementarem Natrium und Wasser hergestellt wird.

In noch einem weiteren Aspekt bezieht sich die Erfindung auf ein Verfahren zur CO₂-neutralen oder CO₂-negativen Herstellung von Natriumcarbonat und Natriumsulfat und/oder Natriumsulfit aus Natriumhydroxid in einer großtechnischen Anlage, umfassend die Schritte:
i. Inkontaktbringen von Natriumhydroxid (NaOH) mit Kohlenstoffdioxid (CO₂) und Schwefeloxiden (SOₓ) in einem Reaktor;
ii. Abtrennen und Filtrieren des entstehenden Natriumcarbonats und des entstehenden Natriumsulfats und/oder Natriumsulfits; und
iii. Kristallisation und/oder Trocknen des Natriumcarbonats und des Natriumsulfats und/oder Natriumsulfits;
dadurch gekennzeichnet, dass das Natriumhydroxid (a) bereits in verwertbarer Form vorliegt oder (b) in derselben Anlage aus elementarem Natrium und Wasser hergestellt wird.

In noch einem weiteren Aspekt bezieht sich die Erfindung auf ein Verfahren zur CO₂-neutralen Herstellung von Natriumcarbonat und gegebenenfalls Natriumsulfat und/oder Natriumsulfit in einer großtechnischen Anlage, die dazu eingerichtet ist, einen Schmelzprozess für Natriumcarbonat und gegebenenfalls Natriumsulfat und/oder Natriumsulfit durchzuführen, wobei das Verfahren die Schritte umfasst:
i. Inkontaktbringen von Natriumhydroxid (NaOH) mit Kohlenstoffdioxid (CO₂) und gegebenenfalls Schwefeloxiden (SOₓ) in einem Reaktor;
ii. Abtrennen und Filtrieren des entstehenden Natriumcarbonats und gegebenenfalls Natriumsulfats; und
iii. Kristallisation und/oder Trocknen des Natriumcarbonats und gegebenenfalls Natriumsulfats und/oder Natriumsulfit;
iv. Verarbeitung des Natriumcarbonats und gegebenenfalls Natriumsulfats in dem Schmelzprozess, wobei CO₂ aus dem Natriumcarbonat und gegebenenfalls SOₓ aus dem Natriumsulfat und/oder Natriumsulfit freigesetzt werden;
dadurch gekennzeichnet, dass das CO₂ und gegebenenfalls SOₓ aus Schritt iv. zumindest teilweise, bevorzugt im Wesentlichen vollständig dem Schritt i. zugeführt werden.

In noch einem weiteren Aspekt bezieht sich die Erfindung auf ein Verfahren zur CO₂-neutralen Herstellung von Natriumcarbonat und Natriumsulfat aus Natriumhydroxid in einer großtechnischen Anlage, dadurch gekennzeichnet, dass CO2 und ggf. SOx aus dem materialbedingten chemischen Verarbeitungsprozess, insbesondere dem der Verschmelzung von Natriumcarbonat in einer Glasschmelze einer Glashütte, stammt und rückgeführt wird.

In noch einem weiteren Aspekt bezieht sich die Erfindung auf ein Verfahren zur Reduktion von CO₂-Emissionen eines Abgasstroms einer großtechnischen Anlage, beispielsweise eines Rauchgasstroms, dadurch gekennzeichnet, dass das CO₂ durch Inkontaktbringen mit bevorzugt in situ hergestelltem wässrigen Natriumhydroxid (NaOH) absorbiert wird.

In noch einem weiteren Aspekt bezieht sich die Erfindung auf ein Verfahren zur Reduktion von SOₓ-Emissionen eines Abgasstroms einer großtechnischen Anlage, dadurch gekennzeichnet, dass das CO₂ durch Inkontaktbringen mit bevorzugt in situ hergestelltem wässrigen Natriumhydroxid (NaOH) absorbiert wird.

In noch einem weiteren Aspekt bezieht sich die Erfindung auf die Verwendung des erfindungsgemäßen Verfahrens oder des erfindungsgemäßen Systems zur Reduktion von CO₂-Emissionen in der Glasherstellung.

In noch einem weiteren Aspekt bezieht sich die Erfindung auf die Verwendung des erfindungsgemäßen Verfahrens oder des erfindungsgemäßen Systems zur Reduktion von SOₓ-Emissionen in der Glasherstellung.

In noch einem weiteren Aspekt bezieht sich die Erfindung auf ein zur CO₂-neutralen Herstellung von Natriumcarbonat und gegebenenfalls Natriumsulfat und/oder Natriumsulfit in einer großtechnischen Anlage mit einem Schmelzprozess für Natriumcarbonat und gegebenenfalls Natriumsulfat und/oder Natriumsulfit, umfassend die untereinander verbundenen Module Lagerbereich, Gasaufbereitungsbereich, Carbonataufbereitungsbereich. Schmelzwanne, Auffangvorrichtungen für beim Schmelzen freigesetzte Gase; und Mittel zur Rückführung von Gasen aus den Auffangvorrichtungen, insbesondere CO₂ und gegebenenfalls SOₓ zu dem Gasaufbereitungsbereich.

### Kurze Beschreibung der Figuren

Fig. 1: Schematische Darstellung einer Ausführungsform für ein erfindungsgemäßes System (Pilotanlage).
Fig. 2: Blockdiagramm einer Ausführungsform des erfindungsgemäßen Verfahrens.

### Detaillierte Beschreibung der Erfindung

Die vorliegende Erfindung kombiniert eine patentierte Technologie zur Herstellung von grünem Wasserstoff mit der Umwandlung von CO₂ in den etwa für Glas-, Papier-, Zucker- und Waschmittelindustrie wichtigen Rohstoff Natriumcarbonat. Die Erfindung basiert auf der chemischen Reaktion von bevorzugt flüssigem Natrium und Wasser, wobei Wasserstoff und Natriumhydroxid (NaOH) entstehen. NaOH ist ein optimales Kohlenstoffabscheidungsmaterial und kann durch eine Absorptionsstufe das CO₂ (etwa aus dem Rauchgas von Industrieanlagen) abscheiden, wobei Natriumcarbonat (Na₂CO₃) entsteht.

Weitere Schritte wie Kristallisation, Filterung und Trocknung ermöglichen die Herstellung von Na₂CO₃ in der gewünschten Qualität.

Erfindungsgemäß ist nicht beabsichtigt, Natriumhydrogencarbonat (Natriumbicarbonat, Natron, NaHCOs) zu isolieren.

Erfindungsgemäß können weitere Abgase wie SOₓ in wichtige Rohstoffe wie Natriumsulfat und/oder Natriumsulfit umgewandelt werden.

Grundsätzlich werden durch die vorliegende Erfindung die folgenden Vorteile erzielt:
(1) Echte grüne Energieproduktion vor Ort, wodurch die Abhängigkeit der betroffenen Unternehmen von fossilen Brennstoffen verringert und Wasserstoffkompression und sicherheitsrelevante Probleme vermieden werden,
(2) Umwandlung eines Umweltproblems und einer wachsenden Kostenquelle (CO₂-Emissionszertifikatkosten) in einen Schlüsselrohstoff (Na₂CO₃), der die globale Rückführung von CO₂ fördert, gegebenenfalls mit gleichzeitiger Umwandlung schädlicher SOₓ in Rohstoffe (Na₂SO₄ und/oder Na₂SO₃),
(3) Versorgungssicherheit mit Natriumcarbonat,
(4) Rohstoffe für industrielle Prozesse (Natrium), die in großem Umfang verfügbar sind und in Europa mit grüner Energie produziert werden,
(5) sinnvolle Verwendung von bisher kostenaufwendig zu entsorgenden Abgasströmen als Baustein in der Synthese wichtiger Rohstoffe, beispielsweise für die Glasherstellung.

Erfindungsgemäß kann die bei der Reaktion von Natrium und Wasser entstehende thermische Energie (Abwärme) zur Bereitstellung mindestens eines Teils der benötigten thermischen Energie für andere Verfahrensschritte eingesetzt werden, in denen eine erhöhte Temperatur nötig ist, oder auch für die Erwärmung von Bestandteilen großtechnischer Anlagen, insbesondere einer Glashütte.

Die Technologie für die *In-situ-* und On-Demand-Erzeugung von grünem Wasserstoff für die Stromerzeugung in Verbindung mit Brennstoffzellen ist in der WO 2011/141413 A1 beschrieben, deren Inhalt hiermit durch Verweis aufgenommen wird. Sie basiert auf der chemischen Wasserspaltungsreaktion (CWSR) mit Alkali-/Erdalkalimetallen (Na, Li, Mg, K usw.) und Wasser.

Wasserstoff wird im Wesentlichen bei etwa Atmosphärendruck, milden Temperaturen und ohne nennenswerten Energiebedarf erzeugt.

Die Reaktion in Gleichung [1] wird dank eines fortschrittlichen Algorithmus zur Dosierungskontrolle und eines effizienten Wärmeabfuhrsystems zur Vermeidung eines Temperaturanstiegs sicher und reibungslos durchgeführt.

Na + H₂O -> NaOH + ½ H₂ [1]

Das stöchiometrische Massenverhältnis beträgt 23 kg Na und 18 kg Wasser, um 1 kg Wasserstoff und 40 kg NaOH zu erhalten, wobei eine Energie von etwa 140 kJ/mol Na freigesetzt wird. Die tatsächliche Leistung des erfindungsgemäßen Systems ist hervorragend, da die Ausbeute der Reaktion nahezu 98 % beträgt.

Neben Wasserstoff wird auch Natriumhydroxid (NaOH) erzeugt. Es wurde nun gefunden, dass die reaktive Absorption von CO₂ in NaOH ein effizienter Weg ist, Treibhausgasemissionen, etwa in Abgasströmen wie beispielsweise Rauchgasströmen, zurückzuhalten. Tatsächlich ist die CO₂-Abscheidungskapazität von NaOH höher als bei herkömmlichem Amin-basierten Lösungsmitteln, wie Mono-Ethanol-Amin (MEA), die derzeit als fast einziges kommerzielles Verfahren in den meisten Nachverbrennungsanlagen eingesetzt werden. Zudem können mithilfe von NaOH auch SOₓ absorbiert werden, die ebenfalls zu vermeidende und sogar gesundheitsschädliche Emissionen darstellen.

Ein "Abgasstrom" gemäß der vorliegenden Erfindung kann insbesondere ein Strom aus Prozessabgasen der Glasindustrie, vorzugsweise Prozessabgase, die bei der Glasschmelze (z.B. durch Einschmelzen von Natriumcarbonat (ein sogenannter materialbedingter CO₂-Ausstoß)) entstehen, sein. Auch die Verwendung eines Rauchgasstroms, z.B. aus einer Gasverbrennung, ist möglich. Der Abgasstrom enthält Kohlendioxid (CO₂). In bestimmten bevorzugten Ausführungsformen enthält der Abgasstrom CO₂ und Schwefeloxide (SOₓ).

Die vorliegende Erfindung schlägt daher eine Kombination des Verfahrens zur Herstellung von grünem Wasserstoff mit der Umwandlung von CO₂ in Natriumcarbonat vor. Zusätzlich kann gegebenenfalls eine Umwandlung von SOₓ in Natriumsulfat und/oder Natriumsulfit erfolgen. In bestimmten Ausführungsformen kann die Umwandlung im Wesentlichen ausschließlich (beispielsweise >90% oder >95%) in Natriumsulfat bevorzugt sein. Ein Fokus der Erfindung liegt in einem neuartigen Absorptionsverfahren mit einer speziellen Packung und speziellen Betriebsbedingungen, um die Gesamteffizienz der Abscheidung zu erhöhen. Das im Rauchgasstrom oder sonstigen Abgasstrom enthaltene CO₂ kann somit im Gegenstrom zur NaOH-Lösung in eine Absorptionskolonne eingeleitet werden. Der enge Kontakt zwischen den Gas- und Flüssigkeitsströmen ermöglicht zum einen die physikalische Umwandlung des gasförmigen (g) CO₂ in wässriges (aq) CO₂, wobei H₂O als flüssig (I) gilt:

CO₂ (g) -> CO₂ (aq) [2]

Die chemische Reaktion zwischen dem wässrigen CO₂ und der Natriumhydroxidlösung läuft dann so ab:

CO₂ (aq) + OH⁻ (aq) -> HCO₃⁻ (aq) [3]

HCO₃⁻ (aq) + OH- (aq) -> CO₃²⁻ (aq) + H₂O (I) [4]

Na₂CO₃ wurde durch die Reduktion von Na⁺ (aq) durch CO₃²⁻ (aq) durch die Nettoreaktion in Gleichung [5]:

CO₂ (g) + 2 NaOH -> Na₂CO₃ (aq) + H₂O (I) [5]

Die starke Bindungsenergie, die mit dieser Reaktion verbunden ist, bietet das Potenzial für hohe CO₂-Belastungen in einem breiten Spektrum von Betriebsbedingungen und Systemdesigns.

Na₂SO₄ kann beispielsweise direkt aus SO₃ entstehen:

SO₃ (g) + 2 NaOH -> Na₂SO₄ (aq) + H₂O (I) [6]

Bei der Reaktion von SO₂ mit Natriumhydroxid (etwa als Natronlauge) kann Natriumsulfit entstehen:

SO₂ (g) + 2 NaOH -> Na₂SO₃ (aq) + H₂O (I) [7]

Dieses Natriumsulfit kann mit Sauerstoff zu Natriumsulfat oxidert werden:

2 Na₂SO₃ (aq) + O₂ (I) -> 2 Na₂SO₄ (aq) [8]

In Anwesenheit von Sauerstoff kann Schwefeldioxid mit NaOH auch direkt zu Natriumsulfat umgesetzt werden:

2 SO₂ (g) + 4 NaOH + O₂ -> 2 Na₂SO₄ (aq) + 2 H₂O (I) [9]

Wie bereits erwähnt, bezieht sich die Erfindung daher in einem ersten Aspekt auf ein Verfahren zur Herstellung von Natriumcarbonat und in einem zweiten Aspekt auf ein Verfahren zur Herstellung von Natriumcarbonat und Natriumsulfat und/oder Natriumsulfit. Gemäß beiden Aspekten umfasst dieses Verfahren zunächst den Schritt des Bereitstellens von elementarem Natrium (Na) in einem ersten Behälter (**Schritt i**.) Grundsätzlich muss Natrium unter Luftabschluss gelagert werden. Auch für das hier beschriebene Verfahren ist eine sauerstofffreie Umgebung wichtig, um heftige Reaktionen des Natriums zu vermeiden. Das Natrium kann in fester Form gelagert werden, es kann für das Verfahren aber auch bereits in flüssiger Form angeliefert werden. In bestimmten Ausführungsformen kann die Anlieferung des Natriums in speziellen Transportbehältern erfolgen.

Für Wasser ist keine besondere Qualität vorgeschrieben, es darf jedoch keine Stoffe enthalten, die zusätzlich mit Natrium oder Schwebstoffen reagieren könnten. Wenn es Feststoffe enthält, muss das Wasser vorher gefiltert werden.

In **Schritt ii.** des Verfahrens wird das Natrium mit Wasser in Kontakt gebracht. In bevorzugten Ausführungsformen wird das Natrium in geschmolzener Form in die Reaktion eingebracht. Durch den flüssigen Zustand ist eine bessere Dosierung möglich, sodass eine stöchiometrische Reaktion erfolgen kann. Die in diesem Schritt erzeugte Reaktionswärme kann beispielsweise zum Schmelzen weiteren Natriums verwendet werden. Auch die Erwärmung einer Ringleitung (siehe unten) oder die Trocknung von Na₂CO₃ und Na₂SO₄ und/oder Na₂SO₃ sind mögliche Verwendungen für die Reaktionswärme. Ähnlich kann die Abwärme aus weiteren Verfahrensschritten eingesetzt werden.

In bevorzugten Ausführungsformen kann der in Schritt ii. erzeugte Wasserstoff zur Bereitstellung mindestens eines Teils der benötigten thermischen Energie für mindestens einen der weiteren Schritte des Verfahrens verwendet werden. So ist es möglich, Energie für die Abtrennung des Natriumcarbonats (Schritt vii.) und/oder die Kristallisation bzw. Trocknung des Natriumcarbonats (Schritt viii.) bereitzustellen.

Parallel oder alternativ dazu kann die in Schritt ii. erzeugte thermische Energie zur Bereitstellung mindestens eines Teils der benötigten thermischen Energie für mindestens einen der weiteren Schritte des Verfahrens, insbesondere Schritt vii. und/oder viii. (siehe unten) verwendet werden.

Eine weitere vorteilhafte erfindungsgemäße Ausgestaltung ist die Bereitstellung mindestens eines Teils der benötigten thermischen Energie für mindestens einen Bestandteil einer großtechnischen Anlage, bzw. die Befeuerung einer Industrieanlage, innerhalb derer das erfindungsgemäße Verfahren durchgeführt wird. Falls beispielsweise in einer Glashütte ein Teil des für das Schmelzen von Reagenzien benötigte Erdgas durch Wasserstoff ersetzt wird, wird so direkt CO₂ eingespart.

**Schritt ii.** kann erfindungsgemäß in einer kontinuierlichen oder einer batch-weisen Reaktionsführung durchgeführt werden. Eine Verarbeitung "batch-weise", also in dezidierten, abgeschlossenen, sich wiederholenden einzelnen Schritten, zeichnet sich dadurch aus, dass beim Inkontaktbringen des Natriums mit Wasser jeweils nur eine Teilmenge des Natriums mit dem Wasser reagiert. Dies kann vorteilhaft sein, da
- die Reaktionsenergie auf einen Teil reduziert wird,
- die Wärmeableitung auf einen Teil reduziert wird,
- das Gefahrenrisiko verringert ist,
- zwischen der Verarbeitung der Teilmengen der "erste Behälter", also der NaOH-Reaktor, zugänglich ist für Reinigung oder Service.

Darüber hinaus kann mit einer batch-weisen Verfahrensführung die Kapazität der Anlage, hier der NaOH-Produktion, über die Häufigkeit der batch-weisen Verarbeitung einfach gesteuert werden.

Der in der Reaktion in Schritt ii. wie oben beschrieben entstandene gasförmige elementare Wasserstoff (H₂) wird in **Schritt iii.** von der übrigen Reaktionsmischung abgetrennt. Dies kann beispielsweise über einen Gas-Wasser-Abscheider erfolgen.

Anschließend wird der abgetrennte gasförmige Wasserstoff in einen geeigneten Auffangbehälter überführt (**Schritt iv**.); dies kann beispielsweise ein Wasserstofftank sein, aus dem der Wasserstoff dann weiterer Verwendung, wie hierin beschrieben, zugeführt werden kann. Es ist auch möglich, den Wasserstoff nur in einer Leitung aufzufangen.

In **Schritt v**. wird die im ersten Behälter verbliebene Zusammensetzung in mindestens einen weiteren Behälter überführt. Gegebenenfalls erfolgt hier ein Abtrennen des in Schritt ii. entstandenen Natriumhydroxids (NaOH). NaOH wird technisch aufgrund der leichteren Handhabung ausschließlich granuliert angeboten. Erfindungsgemäß kann es über die hier beschriebene Abtrennung und anschließende Aufarbeitung jedoch in kristalliner Form bereitgestellt werden. Das heißt, NaOH kann erfindungsgemäß aus der Reaktion mit Na so erzeugt werden, dass es bereits ökonomisch sinnvoll für die nächsten Schritte vorliegt. In kristalliner Form erfolgt beispielsweise die Lösung in Wasser deutlich schneller. Dies wiederum führt zu einer effizienteren Reaktionsführung, da eine aufwändige Vorbereitung entfällt. Die Zuführung von Wasser erleichtert die Reaktionsschnelligkeit.

Zur Überführung liegt NaOH vorzugsweise in wässriger Lösung vor, entweder aufgrund der wässrigen Konsistenz des NaOH nach Inkontaktbringen des Natriums mit einem Überschuss an Wasser, oder aufgrund späterer Zugabe von Wasser und/oder einem Lösungsmittel zum Natriumhydroxid. Ebenfalls möglich ist die Überführung des Natriumhydroxids in fester (granularer oder kristalliner) Form. Erfindungsgemäß bevorzugt ist Wasser als anorganisches Lösungsmittel. Es ist erfindungsgemäß jedoch auch möglich, organisches Lösungsmittel zu verwenden, entweder in Form von Mischungen mit Wasser oder in reiner Form (d.h. mit einem Gehalt von ≥95 Gewichtsprozent; oder ≥99 Gewichtsprozent der entsprechenden Verbindung). Bevorzugte organische Lösungsmittel gemäß der vorliegenden Erfindung sind niederkettige Alkohole und Mischungen davon. "Niederkettig" bedeutet im Rahmen der vorliegenden Erfindung insbesondere, dass das lineare oder verzweigte Kohlenstoffgerüst zwischen 1 und 5 Kohlenstoffatome (C₁-C₅) umfasst. Beispielhafte erfindungsgemäße niederkettige Alkohole sind Methanol, Ethanol, n-Propanol, Isopropanol, 1-Butanol, 2-Butanol, iso-Butanol, tert-Butanol, 1-Pentanol und 2-Pentanol und beliebige Mischungen davon. In einigen Ausführungsformen wird als niederkettiger Alkohol Methanol und/oder Ethanol verwendet.

Erfindungsgemäß kann NaOH in Lösung (mit Wasser oder Mischungen von Wasser und organischem Lösungsmittel oder nur organischem Lösungsmittel) so vorliegen, dass der Gewichtsanteil von NaOH am Gesamtgewicht der Lösung beispielsweise zwischen mindestens etwa 30 Gew.-% und höchstens etwa 60 Gew.-% beträgt.

Im nächsten Verfahrensschritt (**Schritt vi**.) wird das wässrige Natriumhydroxid mit Kohlenstoffdioxid (CO₂) in Kontakt gebracht; dies kann beispielsweise in einer erfindungsgemäßen Absorptionskolonne erfolgen. Vorteilhafterweise kann das Inkontaktbringen über einen Gegenstrom erfolgen. Dies lässt sich vorteilhaft in einer vertikalen Kolonne realisieren. Dies lässt sich vorteilhaft durch Besprühen eines oberflächen-großen Stoffes mit Natriumhydroxid realisieren. Dieser oberflächengroße Stoff ist typischerweise gasdurchlässig. Alternativ ist es möglich, bevorzugt heißes CO₂ (und ggf. SOₓ) in flüssiges, bevorzugt wässriges NaOH einzublasen. Dadurch kann unter weitgehender Vermeidung von Mechanik eine große Kontaktoberfläche für die Reaktion bereitgestellt werden. Für das Einblasen von Gas sind erfindungsgemäß Injektionsdüsen bevorzugt. Es ist alternativ möglich, die Mischung zu rühren.

Das Natriumhydroxid kann vollständig aus den vorherigen Reaktionsschritten stammen oder, bei erhöhtem Bedarf, durch extern eingebrachtes NaOH ergänzt werden.

Das Natriumhydroxid kann in erfindungsgemäß bevorzugten Ausführungsformen des hier beschriebenen Verfahrens wie auch der weiter unten beschriebenen Verfahren und Systeme durch heißes CO₂ erwärmt werden, insbesondere auf eine Temperatur von größer 50°C. Eine zusätzliche Erwärmung des NaOH kann auch über Abwärme aus einem anderen Verfahrensschritt, insbesondere der Reaktion zwischen Natrium und Wasser, stammen.

Das für die Reaktion mit NaOH benötigte CO₂ ist vorzugsweise Bestandteil eines Rauchgasstroms einer Industrieanlage. Dadurch können die Treibhausgasemissionen der Anlage vorteilhaft reduziert werden.

In einer alternativen Ausführungsform kann das Natriumhydroxid auch mit anderen CO₂ enthaltenden Abgasströmen technischer Anlagen in Kontakt gebracht werden. Als bevorzugtes Beispiel ist hier der Abgasstrom aus dem Schmelzprozess der Glasherstellung (auch als "Prozessabgas" bezeichnet) zu nennen. Dieser Strom enthält neben CO₂ Schwefeloxide (SOₓ, also z.B. SO₂, SOs). Dadurch entstehen beim Inkontaktbringen mit NaOH neben Soda schwefelhaltige Salze, insbesondere Natriumsulfat und/oder Natriumsulfit, die insbesondere in der Glasindustrie ebenfalls als Rohstoff eingesetzt werden können. Die Anteile von Natriumcarbonat und Natriumsulfat und/oder Natriumsulfit können sensorisch (also über einen oder mehrere Sensor(en)) bestimmt werden. Eine Trennung der Salze ist über Präzipitation grundsätzlich möglich, in bevorzugten erfindungsgemäßen Ausführungsformen aber nicht notwendig, da die Mischung von Natriumcarbonat und Natriumsulfat und/oder Natriumsulfit direkt weiterverwendet wird, etwa indem die Mischung in eine Glasschmelze zurückgeführt wird. Falls für die weitere Verwendung ein bestimmtes Verhältnis von Natriumcarbonat und Natriumsulfat und/oder Natriumsulfit benötigt wird, kann dies erfindungsgemäß durch ein Zumischen des oder der benötigten Salze(s) erreicht werden.

Wenn die Industrieanlage beispielsweise eine Glashütte ist, ergibt sich als weiterer Vorteil, dass mit der Reduktion der Emissionen gleichzeitig eine oder mehrere wichtige Komponente(n) für die Glasherstellung on-site gewonnen werden kann/können. So entspricht die beim Verschmelzen des Na₂CO₃ freiwerdende Menge CO₂ genau der Menge CO₂, die in der Abgaskolonne bei der Na₂CO₃-Generierung wieder gebunden wird. Insofern kann das erfindungsgemäße Verfahren eine Glasverschmelzung bereitstellen, die netto tatsächlich CO₂-frei (oder CO₂-neutral) oder, wenn noch zusätzliche CO₂.emittierende Schritte durchgeführt werden, zumindest CO₂-reduziert ist. Wie erwähnt, enthält ein Abgasstrom aus der Glasverschmelzung typischerweise auch SOₓ, die mit dem erfindungsgemäßen Verfahren letztlich als Natriumsulfat und/oder Natriumsulfit gebunden werden. Somit kann mit dem erfindungsgemäßen Verfahren auch eine SOₓ-freie Glasverschmelzung bereitgestellt werden. Eine mit dem erfindungsgemäßen Verfahren bzw. System (siehe unten) ausgerüstete Glashütte kann somit zu einer "schwefelfreien" Produktionsstätte werden - vermutlich ein absolutes Novum in der Glasindustrie. Ferner kann in der Glasverschmelzung Natriumsulfat und/oder Natriumsulfit zur besseren Verschmelzung eingesetzt werden, sodass durch die gleichzeitig mit dem Soda erfolgende Rückführung des Natriumsulfats und/oder Natriumsulfits in die Glasschmelze nicht nur eine Separierung des Natriumsulfats und/oder Natriumsulfits überflüssig wird, sondern auch der Einkauf von neuem Natriumsulfat und/oder Natriumsulfit zumindest zum Teil entfallen kann.

Ähnliche Vorteile gelten für Zuckerraffinerien, Papiermühlen oder Waschmittelproduktionsanlagen. Falls nötig, kann das Rauchgas oder der Abgasstrom vor dem Einbringen in den Absorber in geeigneter Weise verdichtet werden.

Schließlich wird das gewünschte Reaktionsprodukt Natriumcarbonat abgetrennt und filtriert (**Schritt vii**.) und der weiteren Aufarbeitung zugeführt; darunter fällt erfindungsgemäß insbesondere eine Kristallisation und/oder ein Trocknen des Natriumcarbonats (**Schritt viii**.). Für den Fall, dass das Produkt auch Natriumsulfat und/oder Natriumsulfit enthält, kann eine Trennung erfolgen, diese ist unter bestimmten Voraussetzungen aber nicht notwendig, etwa wenn ohnehin eine Rückführung des Natriumcarbonats zusammen mit Natriumsulfat und/oder Natriumsulfit in eine Glasschmelze beabsichtigt ist. In diesen Ausführungsformen kann somit Energie und Rohstoffeinsatz optimiert werden. Vorteilhafterweise kann in solchen Ausführungsformen der Gehalt an Natriumcarbonat und/oder Natriumsulfat und/oder Natriumsulfit in dem rückzuführenden Strom, insbesondere vor der Rückführung, bestimmt werden.

Die Abtrennung kann beispielsweise in Form eines Sodaschlamms erfolgen. Hierzu kann der Schlamm abgepumpt werden, etwa in eine Vakuumröhre mit Sieb.

In bestimmten Ausführungsformen des erfindungsgemäßen Verfahrens erfolgt eine direkte Rückführung des gewonnenen Natriumcarbonats in eine Glasschmelze. Das CO₂ aus dem Abgasstrom der Glasschmelze ist in diesem Natriumcarbonat gebunden.

Durch gezielte Trocknung, beispielsweise mittels Füllkörper kann erfindungsgemäß Natriumcarbonat bzw. Natriumsulfat und/oder Natriumsulfit jeder gewünschten Körnung und Restfeuchte hergestellt werden. Auch darin besteht ein Vorteil gegenüber Verfahren des Standes der Technik, in denen Soda gewonnen, gemahlen und mittels Wasser zubereitet wird. Die Trocknung kann erfindungsgemäß beispielsweise über Siebtrocknung und/oder Vakuumtrocknung erfolgen. Das dabei erhaltene Restwasser kann vorteilhaft in Schritt ii. zurückgeführt werden.

In bestimmten Ausführungsformen können die Schritte i.-iv. bei einem Druck zwischen etwa 1 und etwa 2 bar, bevorzugt zwischen etwa 1,2 und etwa 1,8, beispielsweise bei etwa 1,5 bar und/oder einer Temperatur im Bereich von etwa 45°C bis etwa 100°C, bevorzugt von etwa 50°C bis etwa 60°C, beispielsweise etwa 55°C durchgeführt werden. In einer beispielhaften Ausführungsform werden die Schritte bei einem Druck von etwa 1,5 bar und einer Temperatur von etwa 55°C durchgeführt.

Alle Ausführungsformen der hierin beschriebenen erfindungsgemäßen Verfahren können grundsätzlich kontinuierlich oder batch-weise durchgeführt werden. In bestimmten Ausführungsformen ist eine batch-weise Verfahrensführung, insbesondere eine batch-weise Durchführung von Schritt ii., bevorzugt.

Das Natriumcarbonat, das erfindungsgemäß hergestellt wird, ist bevorzugt frei von Natriumhydrogencarbonat, d.h. es enthält Natriumhydrogencarbonat höchstens als Verunreinigung (in einer Menge von höchstens 2 Gewichtsprozent, bevorzugt höchstens 1 Gewichtsprozent, 0,5 Gewichtsprozent, stärker bevorzugt höchstens 0,1 Gewichtsprozent, bezogen auf das Gesamtgewicht Na₂CO₃-Produkt).

In einem weiteren Aspekt bezieht sich die Erfindung auf ein System zur Herstellung von Natriumcarbonat aus elementarem Natrium, umfassend die untereinander verbundenen Module Lagerbereich, Reaktionsbereich, Gasaufbereitungsbereich und Carbonataufbereitungsbereich. In noch einem weiteren Aspekt bezieht sich die Erfindung auf ein System zur Herstellung von Natriumcarbonat und Natriumsulfat und/oder Natriumsulfit aus elementarem Natrium, umfassend die untereinander verbundenen Module Lagerbereich, Reaktionsbereich, Gasaufbereitungsbereich und Carbonataufbereitungsbereich.

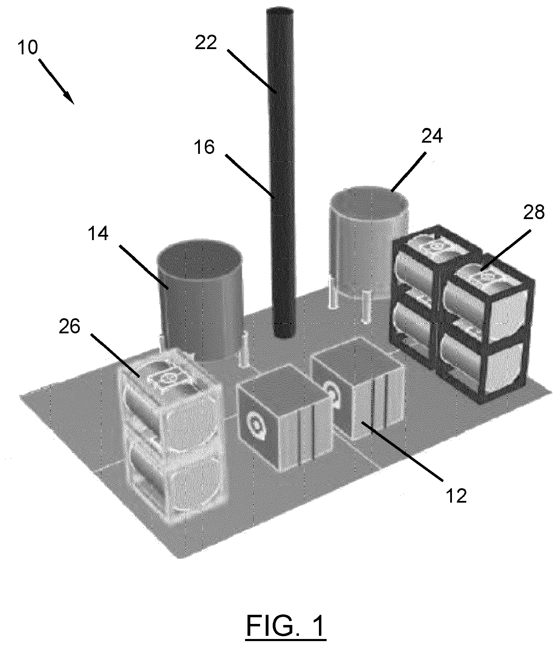

Das Design des erfindungsgemäßen Systems zeichnet sich durch seine Flexibilität, Leistung und Bedienbarkeit aus. Es besteht aus einer Reihe von Modulen, die je nach den Besonderheiten der Anlage, mit der sie kombiniert werden soll, beispielsweise einer Glasproduktionsanlage, angepasst werden können: Menge des zu produzierenden Na₂CO₃ und ggf. Na₂SO₄ und/oder Na₂SO₃ und gewünschte Endqualität, Rauchgaszusammensetzung oder Abgasstromzusammensetzung, verfügbarer Platz für die Installation usw. Die Hauptausrüstungen des Prozesses sind in Figur 1 an einer beispielhaften Produktionsanlage 10 dargestellt, aber die Anlage kann in vier miteinander verbundene und gut unterschiedene Module unterteilt werden, die zum Gesamtbetrieb beitragen:

### LAGERBEREICH (Modul i.)

Der Lagerbereich ist für die Bevorratung der für die Wasserstoffproduktion notwendigen Rohstoffe Natriummetall (s. Bezugszeichen 26 in Figur 1) und Wasser sowie gegebenenfalls organischem Lösungsmittel (s. Bezugszeichen 24 in Figur 1) bestimmt. Das Natriummetall kann in versiegelten Fässern (als Barren/Stangen) unter der Oberfläche einer inerten Flüssigkeit wie Mineralöl oder in ISO-Tanks 26 direkt an das entsprechende Unternehmen geliefert werden. Ebenfalls ist es möglich, das Natrium in speziellen, dafür ausgelegten Transportbehältern in den Lagerbereich anzuliefern und dort bis zur Verwendung zu lagern. Je nach Platzverhältnissen im Werk kann die Disposition unterschiedlich sein. Es ist prinzipiell auch möglich, Natrium direkt in flüssiger Form anzuliefern.

Dementsprechend umfasst der Lagerbereich mindestens einen Lagerbehälter für elementares Natrium 26; und mindestens einen Lagerbehälter für Wasser 24; sowie gegebenenfalls einen Lagerbehälter für organisches Lösungsmittel (nicht in der Figur gezeigt).

Da die Natrium-Wasser-Reaktion idealerweise in flüssigem Zustand abläuft, wird festes Natrium bevorzugt auf die Schmelztemperatur erhitzt. Diese Heizenergie kann aus anderen Bereichen, in denen Wärme abgeführt werden muss, zurückgewonnen und integriert werden. In bevorzugten Ausführungsformen sind erfindungsgemäß entsprechende Mittel zum Transfer der Wärme, inklusive Leitungen, bereitgestellt.

Für Wasser ist keine besondere Qualität vorgeschrieben, es darf jedoch keine Stoffe enthalten, die zusätzlich mit Natrium oder Schwebstoffen reagieren könnten. Wenn es Feststoffe enthält, muss das Wasser vorher gefiltert werden. Hierzu sind dem Fachmann geeignete Mittel bekannt, die dann problemlos in das erfindungsgemäße System integriert werden können.

In bestimmten Ausführungsformen umfasst der Lagerbereich daher als weitere Komponente(n) mindestens eine Heizeinheit zum Schmelzen von Natrium, mindestens eine Heizeinheit zum Erhitzen von Wasser und/oder mindestens eine Filteranlage zum Filtern von Wasser.

### REAKTIONSBEREICH (Modul ii.)

Der Reaktionsteil 12 ist das Herzstück der Wasserstofferzeugung (Gleichung [1]), der anschließend entsprechend dem Bedarf, etwa in einem Prozessofen weiterverarbeitet wird.

Der Reaktionsbereich 12 umfasst erfindungsgemäß mindestens einen heizbaren Reaktor, umfassend mindestens zwei Einlässe und mindestens einen Auslass; mindestens eine Vorrichtung zum steuerbaren Einbringen von Wasser in den Reaktor; wobei in dem Reaktor elementares Natrium mit Wasser umgesetzt wird, wobei gasförmiger elementarer Wasserstoff erzeugt wird.

Vorteilhafterweise umfasst das System auch Mittel, um sicherzustellen, dass die Reaktion in sauerstofffreier Umgebung ablaufen kann, beispielsweise Pumpen.

Um ein Höchstmaß an Sicherheit zu gewährleisten, kann die Reaktion vorteilhafterweise in kleinen Modulen durchgeführt werden. Auf diese Weise gibt es ein minimales Materialinventar im Inneren und die Wärmeabfuhr ist noch effizienter. Die Wasserstoffproduktion ist vollständig an die jeweiligen Bedürfnisse anpassbar: Durch Hinzufügen weiterer Module kann mehr Wasserstoff produziert werden.

Die Wasserstofferzeugung erfolgt *in situ* und auf Abruf (*on demand*) und kann leicht an die Anforderungen, etwa des Ofens, angepasst werden. So kann der Wasserstoff beispielsweise in Pulsen erzeugt werden, etwa wenn der Ofen in diesem Modus arbeitet. Der Wasserstoff kann in einem Gas-Flüssigkeits-Abscheider vom Natriumhydroxidstrom (z. B. 50 % Konzentration) getrennt werden.

Ferner umfasst der Reaktionsbereich 12 mindestens einen Auffangbehälter für Natriumhydroxid 14.

### GASAUFBEREITUNGBEREICH (Modul iii.)

Unter chemischen Absorptionstechnologien werden allgemein Gas-FlüssigkeitsKontakt- und Trennanlagen verstanden, bei denen Gas- und Flüssigkeitsströme im Gegenstrom in einer vertikalen Kolonne fließen, wobei eine ausreichende Durchmischung und Kontaktierung durch Böden oder Packungsmaterial (zufällig oder strukturiert) im Inneren der Kolonne gewährleistet ist. Die Böden im Inneren der Kolonne können beispielsweise horizontal, schräg und/oder kegelförmig angeordnet sein. In bestimmten Ausführungsformen sind sie horizontal angeordnet.

Gemäß der vorliegenden Erfindung umfasst der Gasaufbereitungsbereich mindestens eine Absorptionskolonne 16, umfassend einen Einlass für wässriges Natriumhydroxid, einen Auslass für wässriges Natriumcarbonat, einen Gaseinlass und einen Gasauslass, wobei der Gaseinlass so positioniert ist, dass Gas auf dem Weg vom Gaseinlass zum Gasauslass mit dem wässrigen Natriumhydroxid in Kontakt kommt. Die Absorptionskolonne, in der die chemische Reaktion (in heterogener Phase) zwischen dem CO₂ des Gasstroms, gegebenfalls zusätzlich SOₓ des Gasstroms und dem Natriumhydroxid, stattfindet, kann bevorzugt eine vertikale Kolonne, zum Beispiel ein Kamin 22, sein und aus optimiertem Packungsmaterial bestehen. Der Prozess erfordert eine einfache, aber durchdachte und optimierte Konstruktion.

Typischerweise dienen Abgaskolonnen dazu, die entsprechenden Abgase zu reinigen. Das erfindungsgemäße Verfahren und das erfindungsgemäße System haben zum Ziel, Emissionen (CO₂ und ggf. SOₓ) zu reduzieren und Soda in spezifizierter Qualität herzustellen. Hierfür ist die effiziente Bindung von NaOH mit CO₂ oder mit CO₂ und SOₓ erforderlich. Insbesondere für einige Anwendungen, etwa im Bereich der Glasherstellung, kann es vorteilhaft sein, das Verfahren auf gute Qualität des hergestellten Natriumcarbonats hin zu optimieren. Es gilt also primär das NaOH höchst effektiv reagieren zu lassen; hierauf kann im Rahmen der Erfindung dementsprechend die Bauart der Abgaskolonne speziell abgestimmt sein.

Gemäß einer Ausführungsform ist die Absorptionskolonne (auch Abgaskolonne) so aufgebaut, dass Natriumhydroxid in wässriger Lösung oder als flüssige Mischung mit organischem Lösungsmittel, beispielsweise einem niederkettigen Alkohol, vorliegt und über eine Einlassöffnung von oben eingefüllt wird, bis es eine gewisse Füllhöhe erreicht, welche durch Nachfüllen kontinuierlich in etwa beibehalten werden kann. In diese offene Kolonne kann das CO₂-haltige Abgas (Rauchgas oder Prozessgas) dann über eine Röhre oder Trompete, die an geeigneten Stellen Öffnungen zum Ausströmen des Gases aufweist und die bis weit unter die Füllhöhe in die Kolonne hineinreicht - vorzugsweise von oben - eingeblasen werden und reagiert mit dem NaOH. Ein Einblasen ist erfindungsgemäß auch über Injektionsdüsen möglich. Durch das Einblasen von oben und somit zuerst gegen die Schwerkraft (und in relativem Gegenstrom zur Flüssigkeit) und anschließendem Aufsteigen des Abgases durch die Verdrängung des Gases wird eine längere Verweildauer des Abgasstromes in der Flüssigkeit in der Kolonne erreicht, was vorteilhaft für die Reaktion ist. Durch die Gestaltung der Röhre oder Trompete mit geeigneten Öffnungen kann das Volumen des austretenden Abgases über beispielsweise möglichst viele, verteilt angeordnete Öffnungen - oder auch über ein netzartiges Material - ideal in dem Volumen der Flüssigkeit verteilt werden. Das Abgas entweicht nach oben durch die dortige Öffnung der Kolonne.

Dementsprechend ist im erfindungsgemäßen System die Absorptionskolonne vorzugsweise eine vertikale Kolonne, insbesondere eine vertikale Kolonne, an der sich der Natriumhydroxid-Einlass im oberen Teil und der Gaseinlass im unteren Teil der Kolonne befindet, oder an der sich der Natriumhydroxid-Einlass und der Gaseinlass im oberen Teil der Kolonne befinden.

In bestimmten Ausführungsformen des Systems ist die Absorptionskolonne eine vertikale Kolonne, an der sich der Natriumhydroxid-Einlass und der Gaseinlass im oberen Teil der Kolonne befinden und der Gaseinlass ist dazu eingerichtet, das Gas über eine Röhre oder Trompete mit Öffnungen zum Ausströmen von Gas in die Kolonne einzubringen.

Der Produktstrom (insbesondere wässriges Na₂CO₃, gegebenenfalls mit Na₂SO₄ und/oder Na₂SO₃) kann vorteilhafterweise über einen Auslass, z.B. ein Auslassventil, am Boden der Kolonne, gegebenenfalls mit einer Pumpe ausgeführt werden. In beispielhaften Ausführungsformen erfolgt die sogenannte Abscheidung von Soda und gegebenenfalls Natriumsulfat und/oder Natriumsulfit über ein Abpumpen des Sodaschlamms in eine Vakuumröhre mit Sieb.

Die Steuerung des Auslasses erfolgt mit einer Steuerungseinheit und Sensoren, welche auch die Füllhöhe, die Nachfüllmenge, die Dichte und Qualität der flüssigen Masse und das Volumen und die Qualität des Gasstroms erfassen können. Die Steuerung des Einlasses (z.B. Einlassventils) erfolgt gemäß einer Steuerungseinheit und Sensoren, welche auch die Füllhöhe, die Auslassmenge, die Dichte und Qualität der flüssigen Masse und das Volumen und die Qualität des Gasstroms erfassen. Die Steuerung erlaubt so, den Prozess der Abgaskolonne zu steuern, dass diese stets optimale Soda-Qualität und optimale CO₂- und SOₓ-Reaktionsergebnisse liefert.

Gemäß der vorliegenden Erfindung ist ebenfalls angedacht, dass die Absorptionskolonne mit körnigem (festem) NaOH betrieben werden kann. Hierbei wird die offene Kolonne mit körnigem NaOH befüllt und der Abgasstrom über die Röhre oder Trompete oder alternativ von der Unterseite des Behälters eingeblasen. Wichtig ist hier die Wahl einer ausreichend kleinen Korngröße, um eine vollständige Reaktion zu garantieren. Das sodann entstehende feste Natriumcarbonat und gegebenenfalls Natriumsulfat und/oder Natriumsulfit kann dann über den dazu eingerichteten Auslass, etwa ein Auslassventil, abgeführt werden.

Zusätzliche Schritte vor der Absorption können empfohlen werden, um den Einschluss möglicher gefährlicher Verbindungen in dem geschlossenen Absorptionsbehälter zu vermeiden. Es sind dann noch Reaktivitäts-Tests erforderlich.

### CARBONAT-AUFBEREITUNGSBEREICH (Modul iv.)

Für die weitere Verwendung des Natriumcarbonats, etwa in einem Glasofen, kann es notwendig sein, das Produkt weiteren Schritten wie Kristallisation, Filtration und Trocknung zu unterziehen. Erfindungsgemäß umfasst der Carbonataufbereitungsbereich daher mindestens einen Trockner 20; und mindestens einen Auffangbehälter für Natriumcarbonat 28. In bestimmten Ausführungsformen werden zusätzlich Mittel zur Filtration (siehe oben) und/oder Kristallisation des Natriumcarbonats bereitgestellt, die dem Fachmann bekannt sind. Dementsprechend umfasst das Modul iv. in bevorzugten Ausführungsformen mindestens eine Filtereinheit und/oder mindestens eine Kristallisationseinheit für Natriumcarbonat 18.

Die gewünschten Korngrößen werden dadurch zuverlässig in gleichbleibender Größe zur Verfügung gestellt.

Falls der Gasstrom SOₓ enthält und somit auch Natriumsulfat und/oder Natriumsulfit anfällt, kann das Natriumsulfat und/oder Natriumsulfit über einen Kristallisations- und/oder Trocknungsprozess weiterverarbeitet werden, welcher dem des Na₂CO₃ ähnelt.

Zur Trocknung von Na₂CO₃ und ggf. Na₂SO₄ und/oder Na₂SO₃ können beispielsweise die Abwärme aus dem Reaktionsbereich, die Abwärme des Abgasstroms der Gasverbrennung oder des Produktionsprozesses verwendet werden. Ebenfalls ist es möglich, diese Energie zur Verflüssigung des Natriums oder zur Erwärmung einer Ringleitung einzusetzen. Je nach gewünschtem Einsatzbereich der Abwärme können entsprechende Leitungen bereitgestellt werden.

Vorteilhafterweise kann der Kristallisations- und/oder Trocknungsprozess die Abwärme einer Glasschmelze (wenn das erfindungsgemäße System in eine Glashütte integriert ist) und/oder die Abwärme des NaOH-Reaktors nutzen. Der Wasserdampf kondensiert und kann dem erfindungsgemäßen Verfahren am NaOH-Reaktor wieder zugeführt werden, womit ein Wasserkreislauf entsteht.

Dieses erfindungsgemäße System kann vollständig an die besonderen Merkmale des Emissionsschwerpunkts angepasst werden und ermöglicht es ferner, den Betriebsprozess an die Besonderheiten des Gasstroms (Volumen, Zusammensetzung, Umwandlungsleistung, Morphologie des Endprodukts usw.) anzupassen und vollständig zu optimieren. Auf diese Weise können zukünftig die Planung, der Bau und der Betrieb von Industrieanlagen effektiver durchgeführt werden. Die erfindungsgemäße Anlage ist in der Lage, mit einem hohen CO₂-Volumen zu arbeiten und Na₂CO₃ in den je nach Geschäftsbedarf festgelegten Mengen zu produzieren.

Der Systemaufbau erfolgt modular, beispielsweise derart, dass gleiche Funktionsgruppen jeweils mit geringerer Kapazität, dafür aber mehrfach ausgeführt sind und parallel betrieben werden, sodass eine Redundanz zwischen den Modulen existiert. Dies hat den Vorteil, dass bei Ausfall eines Moduls nur eine geringe Kapazitätsminderung eintritt; ebenso ermöglicht dieser Aufbau ein Servicekonzept, bei welchem jeweils einzelne Module außerhalb der Anlage, z.B. beim Hersteller, gewartet werden können.

Durch den modularen Aufbau kann das erfindungsgemäße System zudem problemlos in bestehende oder neu zu errichtende Anlagen integriert werden. Beispielhafte Anwendungsfälle sind die Integration in eine Anlage zur Herstellung von Glas oder Papier oder zum Raffinieren von Zucker.

Im Rahmen einer Anlage zur Glasherstellung (Glashütte) können beispielsweise das Natriumcarbonat und das Natriumsulfat und/oder Natriumsulfit in ein Gemengehaus transportiert werden, um von dort zusammen mit hauptsächlich Sand und Recyclingglas in die Glasschmelze zu gelangen.

In bestimmten Ausführungsformen ist das erfindungsgemäße System dadurch gekennzeichnet, dass die einzelnen Module i., ii., iii. und/oder iv., insbesondere die Module ii. und iii. mehrfach vorhanden sind und dazu eingerichtet sind, parallel betrieben zu werden. "Mehrfach" bedeutet in diesem Zusammenhang mindestens zweifach. Es können aber jeweils unabhängig auch drei, vier, fünf oder noch mehr der einzelnen Module, insbesondere der Module ii. (Reaktionsbereich) und/oder iii. (Gasaufbereitungsbereich) vorhanden sein. Die einzelnen Module haben vorzugsweise bei mehrfachem Vorhandensein eine gegenüber einem nur einfach vorhandenen Modul eine reduzierte Kapazität. Insgesamt kann sich durch die Verwendung einer ausreichenden Zahl dieser kleineren Module eine erhöhte Gesamtkapazität ergeben.

Ein beispielhaftes System zur CO₂-neutralen Herstellung von Natriumcarbonat und gegebenenfalls Natriumsulfat und/oder Natriumsulfit in einer großtechnischen Anlage mit einem Schmelzprozess für Natriumcarbonat und gegebenenfalls Natriumsulfat und/oder Natriumsulfit, umfasst die folgenden untereinander verbundenen Module:
i. Lagerbereich umfassend mindestens einen Lagerbehälter für Natriumhydroxid (14);
ii. Gasaufbereitungsbereich, wobei der Gasaufbereitungsbereich umfasst:
   mindestens eine Absorptionskolonne (16), umfassend einen Einlass für Natriumhydroxid, einen Auslass für Natriumcarbonat und gegebenenfalls Natriumsulfat und/oder Natriumsulfit, einen Gaseinlass und einen Gasauslass, wobei der Gaseinlass so positioniert ist, dass Gas auf dem Weg vom Gaseinlass zum Gasauslass mit dem wässrigen Natriumhydroxid in Kontakt kommt;
iii. Carbonataufbereitungsbereich, wobei der Carbonataufbereitungs-bereich umfasst:
   a. mindestens einen Trockner (20); und
   b. mindestens einen Auffangbehälter für Natriumcarbonat und gegebenenfalls Natriumsulfat und/oder Natriumsulfit (28);
iv. Schmelzwanne, die dazu eingerichtet ist, Natriumcarbonat und gegebenenfalls Natriumsulfat und/oder Natriumsulfit zu schmelzen;
v. Auffangvorrichtungen, die dazu eingerichtet sind, beim Schmelzen aus dem Natriumcarbonat freigesetztes CO₂ und gegebenenfalls aus dem Natriumsulfat und/oder Natriumsulfit freigesetztes SOₓ aufzufangen;
vi. Mittel, die dazu eingerichtet sind, Gase aus den Auffangvorrichtungen, insbesondere CO₂ und gegebenenfalls SOₓ zu dem Gasaufbereitungsbereich zurückzuführen, beispielsweise Leitungen.

Im Rahmen der vorliegenden Erfindung bedeutet "CO₂-neutral", dass es in dem jeweiligen Verfahren (d.h. in der Gesamtheit der beschriebenen Verfahrensschritte) bzw. System (d.h. in der Gesamtheit der beschriebenen Module) netto zu keinem CO₂-Ausstoß kommt. Das bedeutet, dass zwar in einem oder mehreren Schritten CO₂ entsteht oder freigesetzt wird, in anderen Schritten aber CO₂ gebunden wird, sodass in Summe der CO₂-Ausstoß im Wesentlichen gleich Null, bevorzugt gleich Null ist.

Beispielsweise kann im oben beschriebenen System in Modul iv. (Schmelzwanne) CO₂ entstehen, das aber in Modul ii. (Gasaufbereitungsbereich) wieder gebunden wird.

Ein beispielhaftes System 10 gemäß der vorliegenden Erfindung kann die folgenden Komponenten innerhalb der vier beschriebenen Module umfassen:
- Reaktor zur Wasserstoffproduktion 12
- Absorber zur Kohlendioxid-Entfernung 16
- Gas-Flüssigkeits-Abscheider zur Trennung von H₂ und NaOH
- Wärmetauscher
- Wäsche zur Entfernung anorganischer Gase
- Filter zur Entfernung organsicher Gase
- Trockner zur Natriumcarbonat-Trocknung 20
- Filter für Natriumcarbonat
- Tank für Natrium, beheizt, Heizungen 26
- Wassertank 24
- Natriumhydroxid-Tank 14, gekühlt, Wärmetauscher, Pumpen
- Pumpe zur Natriumlagerung / zum Reaktor
- Pumpe zur Wasserspeicherung / zum Reaktor
- Pumpe vom Abscheider zum Absorber
- Gebläse zur Rauchgasverdichtung

Die Synergien, die durch den Einsatz der vorliegenden Erfindung in energieintensiven Industrien, beispielsweise in einem Glasherstellungsprozess, entstehen, sind einmalig signifikant.

Zum einen wird der Wasserstoff an Ort und Stelle erzeugt, so dass im Gegensatz zu konventionellem komprimiertem oder flüssigem Wasserstoff keine Lagerung erforderlich ist, wodurch Leckagen und andere damit verbundene Gefahren vermieden werden. Die Betriebsbedingungen sind mild (beispielsweise: Temperatur um 55°C und Druck 1,5 bar). Der erzeugte Wasserstoff kann mit dem gewünschten Druck direkt dem Ofen zugeführt werden, je nach den Anforderungen des entsprechenden Unternehmens.

Die Verwendung von Wasserstoff reduziert sowohl die Abhängigkeit von fossilen Brennstoffen als auch die Kohlenstoffemissionen in die Atmosphäre, die mit einer Reduzierung der Erdgasverbrennung verbunden sind. Eine weitere CO₂-Abscheidung wird erreicht, da NaOH, das bei der Wasserstoffproduktion entsteht, dieses Gas effizient absorbiert.

Ferner existiert ein geschlossener CO₂-Kreislauf und ein geschlossener SOx-Kreislauf, indem das bei der Erwärmung des Natroncarbonats und gegebenenfalls des Natriumsulfats und/oder Natriumsulfits, etwa in einer Glasschmelze, freiwerdende CO₂ und SOₓ in der Absorptionskolonne mit Natriumhydroxid wieder gebunden und der Schmelze wieder zugeführt werden können.

In einem weiteren Aspekt bezieht sich die Erfindung auf ein Verfahren zur CO₂-neutralen oder CO₂-negativen Herstellung von Natriumcarbonat aus Natriumhydroxid in einer großtechnischen Anlage, umfassend die Schritte:
i. Inkontaktbringen von Natriumhydroxid (NaOH) mit Kohlenstoffdioxid (CO₂) in einem Reaktor;
ii. Abtrennen und Filtrieren des entstehenden Natriumcarbonats; und
iii. Kristallisation und/oder Trocknen des Natriumcarbonats. Diese Schritte können wie bereits oben erläutert durchgeführt werden.

In noch einem weiteren Aspekt bezieht sich die Erfindung auf ein Verfahren zur CO₂-neutralen Herstellung von Natriumcarbonat und gegebenenfalls Natriumsulfat und/oder Natriumsulfit in einer großtechnischen Anlage, wobei das Verfahren die Schritte umfasst:
i. Inkontaktbringen von Natriumhydroxid (NaOH) mit Kohlenstoffdioxid (CO₂) und gegebenenfalls Schwefeloxiden (SOₓ) in einem Reaktor;
ii. Abtrennen und Filtrieren des entstehenden Natriumcarbonats und gegebenenfalls Natriumsulfats und/oder Natriumsulfits; und
iii. Kristallisation und/oder Trocknen des Natriumcarbonats und gegebenenfalls Natriumsulfats und/oder Natriumsulfits;
dadurch gekennzeichnet, dass das CO₂ und gegebenenfalls SOₓ zumindest teilweise aus chemischen Reaktionen stammen, die innerhalb derselben Anlage durchgeführt werden.

Beispielsweise kann die großtechnische Anlage dazu eingerichtet sein, einen Schmelzprozess für Natriumcarbonat und gegebenenfalls Natriumsulfat und/oder Natriumsulfit durchzuführen. Bei einem solchen Schmelzprozess kann aus Natriumcarbonat Kohlendioxid freigesetzt werden und aus Natriumsulfat und/oder Natriumsulfit Schwefeloxide. Dieses CO₂ und gegebenenfalls SOₓ kann erfindungsgemäß dazu verwendet werden, an anderer Stelle in derselben Anlage Natriumcarbonat und gegebenenfalls Natriumsulfat und/oder Natriumsulfit wieder zu synthetisieren. Insbesondere kann die großtechnische Anlage eine Glashütte sein.

Dementsprechend ist die Erfindung auch auf ein Verfahren zur CO₂-neutralen Herstellung von Natriumcarbonat und gegebenenfalls Natriumsulfat und/oder Natriumsulfit in einer großtechnischen Anlage gerichtet, die dazu eingerichtet ist, einen Schmelzprozess für Natriumcarbonat und gegebenenfalls Natriumsulfat und/oder Natriumsulfit durchzuführen, wobei das Verfahren die Schritte umfasst:
i. Inkontaktbringen von Natriumhydroxid (NaOH) mit Kohlenstoffdioxid (CO2) und gegebenenfalls Schwefeloxiden (SOₓ) in einem Reaktor;
ii. Abtrennen und Filtrieren des entstehenden Natriumcarbonats und gegebenenfalls Natriumsulfats und/oder Natriumsulfits; und
iii. Kristallisation und/oder Trocknen des Natriumcarbonats und gegebenenfalls Natriumsulfats und/oder Natriumsulfits;
iv. Verarbeitung des Natriumcarbonats und gegebenenfalls Natriumsulfats und/oder Natriumsulfits in dem Schmelzprozess, wobei CO₂ aus dem Natriumcarbonat und gegebenenfalls SOₓ aus dem Natriumsulfat und/oder Natriumsulfit freigesetzt werden;
dadurch gekennzeichnet, dass das CO₂ und gegebenenfalls SOₓ aus Schritt iv. zumindest teilweise, bevorzugt im Wesentlichen vollständig dem Schritt i. zugeführt werden. Eine "zumindest teilweise" Rückführung bedeutet hierbei, dass mindestens etwa 20 Gew.-%, bevorzugt mindestens 50 Gew.-% des freigesetzten CO₂ und gegebenenfalls SOₓ aus Schritt iv. in Schritt i. zurückgeführt werden. Eine "im Wesentlichen vollständige" Rückführung bedeutet, dass mindestens etwa 90 Gew.-%, bevorzugt mindestens 95 Gew.-%, stärker bevorzugt mindestens 99 Gew.-% des freigesetzten CO₂ und gegebenenfalls SOₓ aus Schritt iv. in Schritt i. zurückgeführt werden.

Gemäß bestimmter bevorzugter Ausführungsformen ist dieses Verfahren dadurch gekennzeichnet, dass das Natriumhydroxid in derselben Anlage aus elementarem Natrium und Wasser hergestellt wird. Alternativ ist erfindungsgemäß vorgesehen, dass das Natriumhydroxid bereits in (weiter)verwertbarer Form wie oben beschrieben vorliegt. Erfindungsgemäß wird NaOH jedoch nicht aus Natriumsalzsolen, wie etwa NaCl-Sole, hergestellt.

Für den Fall, dass das Natriumhydroxid in derselben Anlage aus elementarem Natrium und Wasser hergestellt wird, kann gemäß weiterer Ausführungsformen der dabei entstehende Wasserstoff und/oder die bei der Reaktion entstehende thermische Energie (Abwärme) zur Bereitstellung mindestens eines Teils der benötigten thermischen Energie für mindestens einen der Schritte des Verfahrens vorgesehen sein. Infrage kommen hier etwa die Abtrennung, Kristallisation und/oder die Trocknung des Natriumcarbonats. Ebenso ist es erfindungsgemäß möglich, den Wasserstoff und/oder die Abwärme zur Bereitstellung thermischer Energie in einem oder mehreren Verfahrensschritten eines mit dem erfindungsgemäßen Verfahren gekoppelten weiteren Verfahren, beispielsweise in einem Verfahren zur Glasherstellung, Papierherstellung oder Raffinieren von Zucker, einzusetzen.

Die gute Regulierbarkeit der Wasserstofferzeugung erlaubt es in bestimmten Ausführungsformen, sie dynamisch an die Energieerfordernisse der Verfahrensschritte, in denen der Wasserstoff als Lieferant thermischer Energie zum Einsatz kommen soll, anzupassen. Diese Verfahrensschritte können bevorzugt wiederum das Abtrennen, Filtrieren, Kristallisieren und/oder Trocknen von Natriumcarbonat, stärker bevorzugt das Kristallisieren und/oder Trocknen sein, oder mindestens ein Verfahrensschritt eines mit dem erfindungsgemäßen Verfahren gekoppelten weiteren Verfahrens wie beschrieben.

In noch einem weiteren Aspekt bezieht sich die Erfindung auf ein Verfahren zur Reduktion von CO₂-Emissionen eines Abgasstroms wie etwa eines Rauchgasstroms einer großtechnischen Anlage, dadurch gekennzeichnet, dass das CO₂ durch Inkontaktbringen mit wässrigem Natriumhydroxid (NaOH) absorbiert wird. Das wässrige NaOH kann erfindungsgemäß grundsätzlich aus technischem NaOH hergestellt werden, bevorzugt ist jedoch eine in situ-Herstellung aus Natrium und Wasser, wie oben beschrieben (Schritte i. - ii. des Verfahrens zur Herstellung von Natriumcarbonat). Bei der großtechnischen Anlage kann es sich beispielsweise um eine Glashütte, Papiermühle, Zuckerfabrik handeln. Ebenfalls umfasst sind andere Anlagen, die große Mengen CO₂-haltiges Rauchgas oder andere CO₂- und ggf. SOₓ-haltige Abgasströme produzieren.

Für alle hierin beschriebenen Verfahren ist es bevorzugt, dass das Natriumhydroxid im Schritt des Inkontaktbringens mit CO₂ und ggf. SOₓ als wässrige Lösung vorliegt. Dadurch kann eine besonders effiziente Abscheidung von Natriumcarbonat und ggf. Natriumsulfat/-sulfit erreicht werden.

Für alle hierin beschriebenen Verfahren gilt, dass die CO₂-Emissionen in bestimmten Ausführungsformen aus der Verbrennung eines fossilen Energieträgers (wie Braunkohle, Steinkohle, Torf, Erdgas und Erdöl) stammen, beispielsweise aus einer Gasverbrennung, insbesondere einer Erdgasverbrennung. Ein zentraler Aspekt ist jedoch, dass die CO₂-Emissionen auch aus einer Glasschmelze (etwa aus dem Schmelzen von Natriumcarbonat) stammen können. Es ist erfindungsgemäß also bevorzugt, dass das CO₂ Bestandteil eines Abgasstroms einer großtechnischen Anlage, insbesondere einer Glashütte, ist, wobei das CO₂ insbesondere aus dem materialbedingten chemischen Verarbeitungsprozess stammt, insbesondere dem einer Glasschmelze einer Glashütte.

Wichtig zu bemerken ist in diesem Zusammenhang, dass in den erfindungsgemäßen Verfahren, die Wasserstoff bereitstellen, durch die Verbrennung von Wasserstoff der Bedarf an der Verbrennung fossiler Energieträger, z.B. Gasverbrennung, reduziert wird.

Erfindungsgemäß ist es durch die Steuerung der Wasserstofferzeugung möglich, die Mischung von Wasserstoff und fossilen Energieträgern einzustellen. Dementsprechend kann in den erfindungsgemäßen Verfahren, die Wasserstoff bereitstellen, die Mischung der Verbrennung von Wasserstoff und Gasverbrennung optimiert werden, und zwar derart, dass eine CO₂-Neutralität - falls gewünscht auch CO₂-Negativität - und/oder eine Kostenoptimierung erzielt wird. Unter CO₂-Neutralität wird hierin verstanden, dass ein Verfahren oder Verfahrensschritt überhaupt kein CO₂ emittiert oder die CO₂-Emissionen vollständig kompensiert werden, es also netto zu keiner CO₂-Emission kommt. Unter CO₂-negativ wird hierin der Fall verstanden, in dem die CO₂-Bilanz negativ ist, da mehr CO₂ gebunden wird als erzeugt wird - dies kann auch als Sonderfall von CO₂-neutral angesehen werden. So lässt sich beispielweise ein CO₂-negativer Prozess einstellen, indem mehr CO₂-bindendes NaOH erzeugt wird als die eigene Gasverbrennung CO₂ erzeugt; somit kann mittels des Überschusses an NaOH auch CO₂ aus externen Quellen gebunden werden, womit die Bilanz des hier vorgestellten Systems CO₂-negativ ist.

In Fällen, bei denen CO₂-neutrale Prozesse mit nicht CO₂-neutralen Prozessen kombiniert eingesetzt werden oder bei denen CO₂-neutrale Prozesse nicht optimal arbeiten, entsteht der Fall eines CO₂-reduzierten Prozesses. Somit muss jeder erfindungsgemäße CO₂-neutrale Prozess auch als ein CO₂-reduzierter Prozess verstanden werden. Selbiges gilt auch bei Betrachtung von Materialien; somit muss jedes erfindungsgemäß CO₂-neutral hergestellte Material auch als ein CO₂-reduziert hergestelltes Material verstanden werden

Das Ausgangsmaterial für die erfindungsgemäßen Verfahren ist Natrium. Es ist das sechsthäufigste Element in der Erdkruste und kommt in zahlreichen Mineralien wie Feldspat, Sodalith und Halit (NaCl) sowie in gelöster Form im Meer vor. Die Natriumproduktion basiert auf der Elektrolyse von NaCl, die mittlerweile mit Strom aus erneuerbaren Quellen zu einem wettbewerbsfähigen Preis durchgeführt werden kann. Außerdem ist Natrium grundsätzlich für die langfristige Lagerung geeignet, da frühere Tests gezeigt haben, dass der Brennstoff seine Eigenschaften über Jahre hinweg nicht verliert.

Die Massenbilanz der Materialien ist eindeutig günstig, da 23 kg Natrium etwa 53 kg Natriumcarbonat ergeben. Speziell für Anwendungen in der Glasindustrie verringert die vertikale Integration von Natriumcarbonat zudem die Unsicherheit und Abhängigkeit von den Schwankungen auf dem Markt für diesen Stoff, da sie weniger empfindlich auf Preisänderungen reagiert und die Lieferkette sicherstellt.

Ein weiterer Vorteil ist, dass das mit dem erfindungsgemäßen Verfahren hergestellte Natriumcarbonat als absolut grünes Produkt eingestuft wird, das so nirgendwo auf dem Markt zu finden ist. Heutzutage sind etwa 75 Prozent der weltweiten Produktion von Soda synthetische Soda aus Natriumchlorid. Beim Solvay-Verfahren werden Natriumchlorid-Sole, Kalkstein, Hüttenkoks und Ammoniak als Rohstoffe für eine Reihe von Reaktionen verwendet, die zur Herstellung von Soda führen. Während dieses Herstellungsprozesses werden 0,45 t CO₂ / t Soda in die Atmosphäre emittiert.

Damit wird zusätzlich CO₂ eingespart, ebenso NOₓ und SOₓ infolge der verminderten Verbrennung von Erdgas.

Daher bezieht sich die Erfindung in noch einem weiteren Aspekt auf die Verwendung des erfindungsgemäßen Verfahrens wie hierin beschrieben oder des erfindungsgemäßen Systems wie hierin beschrieben zur Reduktion von CO₂-Emissionen in der Glasherstellung. Ferner bezieht sich die Erfindung in noch einem weiteren Aspekt auf die Verwendung des erfindungsgemäßen Verfahrens wie hierin beschrieben oder des erfindungsgemäßen Systems wie hierin beschrieben zur Reduktion von SOₓ-Emissionen, oder von CO₂-Emissionen und SOₓ-Emissionen in der Glasherstellung.

Eine initiale Durchführbarkeitsplanung für Unternehmen in der Glasindustrie zeigt, dass in verschiedenen Szenarien (pessimistisch, wahrscheinlicher und optimistisch) eine Investition (CAPEX) inklusive Betriebskosten (CAPEX) in wenigen Jahren vollständig amortisiert werden würde. Im wahrscheinlichsten Szenario würde sich die Gesamtinvestition bereits nach nur 1,5 Jahren amortisiert haben.

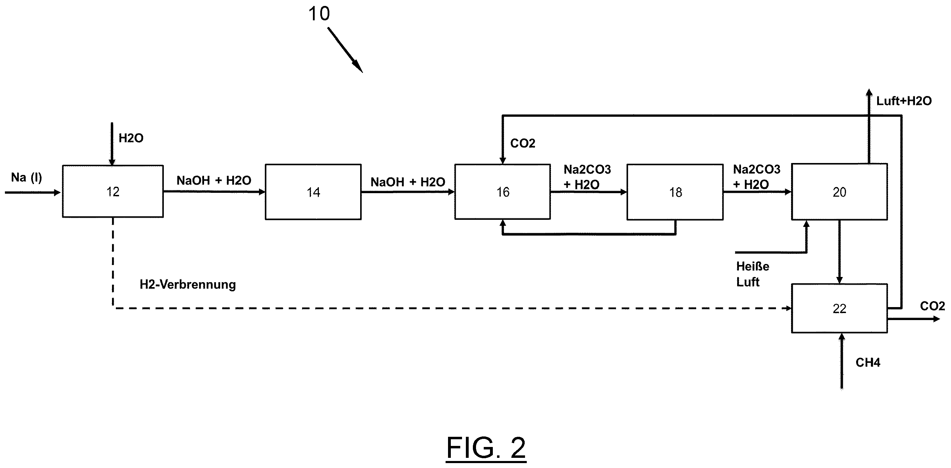

Das voranstehend detailliert beschriebene erfindungsgemäße Verfahren ist in Figur 2 schematisch übersichtlich zusammengefasst.

Im Reaktionsbereich 12 wird Natrium mit Wasser in Kontakt gebracht (Schritt ii. des Verfahrens). Hierbei entsteht Wasserstoff (H₂) und wässriges Natriumhydroxid (NaOH).

Das Natriumhydroxid wird in einem Natriumhydroxid-Tank 14 gelagert (Schritt v. des Verfahrens). Gegebenenfalls erfolgt hier ein Abtrennen des in Schritt ii. entstandenen Natriumhydroxids.

In einem nächsten Schritt (Schritt vi.) wird das wässrige Natriumhydroxid mit Kohlenstoffdioxid (CO₂) in einem CO₂-Absorber 16 in Kontakt gebracht. Alternativ wird das wässrige Natriumhydroxid mit Kohlenstoffdioxid (CO₂) und Schwefeloxiden (SOₓ) in einem CO₂-Absorber 16 in Kontakt gebracht. Das für die Reaktion mit NaOH benötigte CO₂ ist vorzugsweise Bestandteil eines Rauchgasstroms einer Industrieanlage. Ebenso bevorzugt ist es im Rahmen der Erfindung, dass das CO₂ und ggf. das SOₓ einem Abgasstrom einer Industrieanlage entstammen. In Figur 2 wird das CO₂ einem Kamin 22 der Industrieanlage entnommen. Der den Kamin 22 durchströmende Abgasstrom kann erfindungsgemäß auch SOₓ enthalten.

Schließlich wird das gewünschte Reaktionsprodukt Natriumcarbonat in einem Crystallizer und/oder Filter 18 abgetrennt und filtriert (Schritt vii.). Falls das Reaktionsprodukt auch Natriumsulfat und/oder Natriumsulfit enthält, kann dieses zusammen mit dem Natriumcarbonat abgetrennt und weiterverarbeitet werden.

In einem Trockner 20 findet in dieser beispielhaften Anlage ferner ein Trocknen des Natriumcarbonats (Schritt viii.) statt. Durch gezielte Trocknung mittels Füllkörper kann erfindungsgemäß Natriumcarbonat jeder gewünschten Körnung und Restfeuchte hergestellt werden. Der Trockner kann analog auch zur Trocknung einer Mischung von Natriumcarbonat und Natriumsulfat und/oder Natriumsulfit, oder, wenn Natriumsulfat/-sulfit und Natriumcarbonat getrennt werden, nur des Natriumsulfats und/oder Natriumsulfits verwendet werden. Gegebenenfalls können (nicht abgebildet) separate Trockner für Na₂CO₃ und Na₂SO₄ und/oder Na₂SO₃ verwendet werden.

Wie in Figur 2 zu erkennen ist, wird hier der im Reaktionsbereich 12 erzeugte Wasserstoff zur Bereitstellung mindestens eines Teils der benötigten thermischen Energie für mindestens einen der weiteren Schritte des Verfahrens verwendet werden (in Figur 2 als "H2-Verbrennung" gekennzeichnet).

Eine beispielhafte, nicht beschränkende, Durchführung des erfindungsgemäßen Verfahrens zur CO₂-neutralen Herstellung von Natriumcarbonat ist durch die nachfolgenden Schritte beschrieben:
(1) Nutzung des Abgases CO₂ als Rohstoff
(2) Kontinuierliche Messung des CO₂, im Sinne einer "Wareneingangskontrolle"
(3) Erwärmung von NaOH durch die CO₂-Temperatur des Abgases und Nutzung von Abwärme, beispielsweise aus der Reaktion zwischen Natrium und Wasser
(4) Einblasen des heißen CO₂, Entstehung von Bläschen mit großer Oberfläche, Vermeidung von Mechanik
(5) Rühren durch Blasen von CO₂ mit Injektionsdüsen
(6) Abpumpen des Sodaschlamms in Vakuumröhre mit Sieb
(7) Erwärmung auf mehr als 50°C mit Abwärme, beispielsweise aus der Reaktion zwischen Natrium und Wasser
(8) Trocknung des Soda durch Siebtrocknung in Verbindung mit Vakuumtrocknung
(9) Rückführung des bei Trocknung erhaltenen Restwassers in geeigneten Verfahrensschritt (beispielsweise Reaktion mit Natrium).

Die vorliegende Erfindung wird ferner durch die folgenden **Punkte** näher beschrieben.

Punkt 1. Verfahren zur Herstellung von Natriumcarbonat, umfassend die Schritte:
i. Bereitstellen von elementarem Natrium (Na) in einem ersten Behälter;
ii. Inkontaktbringen des Natriums mit Wasser und/oder organischem Lösungsmittel;
iii. Abtrennen des in Schritt ii. entstandenen gasförmigen elementaren Wasserstoffs (H₂);
iv. Überführen des abgetrennten gasförmigen Wasserstoffs in einen geeigneten Auffangbehälter;
v. Überführen der verbleibenden Zusammensetzung aus dem ersten Behälter in mindestens einen weiteren Behälter und gegebenenfalls Abtrennen des in Schritt ii. entstandenen Natriumhydroxids (NaOH);
vi. Inkontaktbringen des Natriumhydroxids mit Kohlenstoffdioxid (CO₂);
vii. Abtrennen und Filtrieren des entstehenden Natriumcarbonats; und
viii. Kristallisation und/oder Trocknen des Natriumcarbonats.

Punkt 2. Verfahren zur Herstellung von Natriumcarbonat und Natriumsulfat und/oder Natriumsulfit, umfassend die Schritte:
i. Bereitstellen von elementarem Natrium (Na) in einem ersten Behälter;
ii. Inkontaktbringen des Natriums mit Wasser;
iii. Abtrennen des in Schritt ii. entstandenen gasförmigen elementaren Wasserstoffs (H₂);
iv. Überführen des abgetrennten gasförmigen Wasserstoffs in einen geeigneten Auffangbehälter;
v. Überführen der verbleibenden Zusammensetzung aus dem ersten Behälter in mindestens einen weiteren Behälter und gegebenenfalls Abtrennen des in Schritt ii. entstandenen Natriumhydroxids (NaOH);
vi. Inkontaktbringen des Natriumhydroxids mit Kohlenstoffdioxid (CO₂) und Schwefeloxiden (SOₓ);
vii. Abtrennen und Filtrieren des entstehenden Natriumcarbonats und des entstehenden Natriumsulfats und/oder Natriumsulfits; und
viii. Kristallisation und/oder Trocknen des Natriumcarbonats und des Natriumsulfats und/oder Natriumsulfits.

Punkt 3. Verfahren nach Punkt 1 oder 2, dadurch gekennzeichnet, dass die Schritte i.-iv. bei einem Druck zwischen etwa 1 und etwa 2 bar, bevorzugt zwischen etwa 1,2 und etwa 1,8 bar, beispielsweise bei etwa 1,5 bar und/oder einer Temperatur im Bereich von etwa 45°C bis etwa 100°C, bevorzugt von etwa 50°C bis etwa 60°C, beispielsweise etwa 55°C durchgeführt werden.

Punkt 4. Verfahren nach einem der vorhergehenden Punkte, dadurch gekennzeichnet, dass das elementare Natrium in flüssiger Form bereitgestellt wird.

Punkt 5. Verfahren nach einem der vorhergehenden Punkte, dadurch gekennzeichnet, dass das CO₂ Bestandteil eines Abgasstroms einer großtechnischen Anlage, insbesondere einer Glashütte, ist.

Punkt 6. Verfahren nach einem der vorhergehenden Punkte, dadurch gekennzeichnet, dass das CO₂ Bestandteil eines Rauchgasstroms einer Industrieanlage, insbesondere einer Glashütte, ist.

Punkt 7. Verfahren nach einem der vorhergehenden Punkte, dadurch gekennzeichnet, dass SOₓ Bestandteil eines Abgasstroms einer großtechnischen Anlage, insbesondere einer Glashütte, ist.

Punkt 8. Verfahren nach Punkt 5, dadurch gekennzeichnet, dass der Abgasstrom CO₂ und SOₓ enthält.

Punkt 9. Verfahren nach einem der vorhergehenden Punkte, dadurch gekennzeichnet, dass der in Schritt ii. erzeugte Wasserstoff zur Bereitstellung mindestens eines Teils der benötigten thermischen Energie für (a) mindestens einen der weiteren Schritte des Verfahrens, insbesondere Schritt vii. und/oder viii., und/oder (b) die Befeuerung mindestens eines Bestandteils einer Industrieanlage gemäß Punkt 6 vorgesehen ist.

Punkt 10. Verfahren nach einem der vorhergehenden Punkte, dadurch gekennzeichnet, dass die in Schritt ii. erzeugte thermische Energie zur Bereitstellung mindestens eines Teils der benötigten thermischen Energie für (a) mindestens einen der weiteren Schritte des Verfahrens, insbesondere Schritt vii. und/oder viii., und/oder (b) mindestens einen Bestandteil einer großtechnischen Anlage, insbesondere einer Glashütte, vorgesehen ist.

Punkt 11. Verfahren nach einem der vorhergehenden Punkte, dadurch gekennzeichnet, dass das Verfahren batch-weise durchgeführt wird, insbesondere dass Schritt ii. batch-weise durchgeführt wird.

Punkt 12. Verfahren nach einem der vorhergehenden Punkte, dadurch gekennzeichnet, dass das Überführen der verbleibenden Zusammensetzung in flüssiger Form erfolgt, wobei als Lösungsmittel Wasser, eine Mischung von Wasser und organischem Lösungsmittel, oder nur organisches Lösungsmittel verwendet wird, wobei vorzugsweise als Lösungsmittel Wasser verwendet wird.

Punkt 13. Verfahren nach Punkt 12, dadurch gekennzeichnet, dass das organische Lösungsmittel ausgewählt ist aus niederkettigen Alkoholen und beliebigen Mischungen davon, insbesondere Methanol und/oder Ethanol.

Punkt 14. Verfahren nach einem der vorhergehenden Punkte, dadurch gekennzeichnet, dass nach Abschluss von Schritt vi. der Anteil des Natriumcarbonats und/oder des Natriumsulfats und/oder Natriumsulfits sensorisch bestimmt wird.

Punkt 15. Verfahren nach einem der Punkte 2 bis 14, dadurch gekennzeichnet, dass das Gemisch aus Natriumcarbonat und Natriumsulfat und/oder Natriumsulfit, gegebenenfalls nach Anpassung des Gewichtsverhältnisses zueinander, direkt wieder einer Glasschmelze zugeführt wird.

Punkt 16. System (10) zur Herstellung von Natriumcarbonat aus elementarem Natrium, umfassend die untereinander verbundenen Module:
i. Lagerbereich, wobei der Lagerbereich umfasst:
   a. mindestens einen Lagerbehälter für elementares Natrium (26); und
   b. mindestens einen Lagerbehälter für Wasser (24);
ii. Reaktionsbereich (12), wobei der Reaktionsbereich (12) umfasst:
   a. mindestens einen heizbaren Reaktor, umfassend mindestens zwei Einlässe und mindestens einen Auslass;
   b. mindestens eine Vorrichtung zum steuerbaren Einbringen von Wasser in den Reaktor;
      wobei in dem Reaktor elementares Natrium mit Wasser umgesetzt wird, wobei gasförmiger elementarer Wasserstoff erzeugt wird;
   c. mindestens einen Gas-Flüssigkeits-Abscheider;
   d. mindestens einen Auffangbehälter für Natriumhydroxid (14);
iii. Gasaufbereitungsbereich, wobei der Gasaufbereitungsbereich umfasst:
   mindestens eine Absorptionskolonne (16), umfassend einen Einlass für wässriges Natriumhydroxid, einen Auslass für wässriges Natriumcarbonat, einen Gaseinlass und einen Gasauslass,
   wobei der Gaseinlass so positioniert ist, dass Gas auf dem Weg vom Gaseinlass zum Gasauslass mit dem wässrigen Natriumhydroxid in Kontakt kommt;
iv. Carbonataufbereitungsbereich, wobei der Carbonataufbereitungsbereich umfasst:
   a. mindestens einen Trockner (20); und
   b. mindestens einen Auffangbehälter für Natriumcarbonat (28).

Punkt 17. System (10) zur Herstellung von Natriumcarbonat und Natriumsulfat und/oder Natriumsulfit aus elementarem Natrium, umfassend die untereinander verbundenen Module:
i. Lagerbereich, wobei der Lagerbereich umfasst:
   a. mindestens einen Lagerbehälter für elementares Natrium (26); und
   b. mindestens einen Lagerbehälter für Wasser (24);
ii. Reaktionsbereich (12), wobei der Reaktionsbereich (12) umfasst:
   a. mindestens einen heizbaren Reaktor, umfassend mindestens zwei Einlässe und mindestens einen Auslass;
   b. mindestens eine Vorrichtung zum steuerbaren Einbringen von Wasser in den Reaktor;
      wobei in dem Reaktor elementares Natrium mit Wasser umgesetzt wird, wobei gasförmiger elementarer Wasserstoff erzeugt wird;
   c. mindestens einen Gas-Flüssigkeits-Abscheider;
   d. mindestens einen Auffangbehälter für Natriumhydroxid (14);
iii. Gasaufbereitungsbereich, wobei der Gasaufbereitungsbereich umfasst:
   mindestens eine Absorptionskolonne (16), umfassend einen Einlass für wässriges Natriumhydroxid, einen Auslass für wässriges Natriumcarbonat und wässriges Natriumsulfat und/oder Natriumsulfit, einen Gaseinlass und einen Gasauslass,
   wobei der Gaseinlass so positioniert ist, dass Gas auf dem Weg vom Gaseinlass zum Gasauslass mit dem wässrigen Natriumhydroxid in Kontakt kommt;
iv. Carbonataufbereitungsbereich, wobei der Carbonataufbereitungsbereich umfasst:
   a. mindestens einen Trockner (20); und
   b. mindestens einen Auffangbehälter für Natriumcarbonat und Natriumsulfat und/oder Natriumsulfit (28).

Punkt 18. System (10) zur Herstellung von Natriumcarbonat und Natriumsulfat und/oder Natriumsulfit aus elementarem Natrium, umfassend die untereinander verbundenen Module:
i. Lagerbereich, wobei der Lagerbereich umfasst:
   a. mindestens einen Lagerbehälter für elementares Natrium (26); und
   b. mindestens einen Lagerbehälter für Wasser (24);
ii. Reaktionsbereich (12), wobei der Reaktionsbereich (12) umfasst:
   a. mindestens einen heizbaren Reaktor, umfassend mindestens zwei Einlässe und mindestens einen Auslass;
   b. mindestens eine Vorrichtung zum steuerbaren Einbringen von Wasser in den Reaktor;
      wobei in dem Reaktor elementares Natrium mit Wasser umgesetzt wird, wobei gasförmiger elementarer Wasserstoff erzeugt wird;
   c. mindestens einen Gas-Flüssigkeits-Abscheider;
   d. mindestens einen Auffangbehälter für Natriumhydroxid (14);
iii. Gasaufbereitungsbereich, wobei der Gasaufbereitungsbereich umfasst:
   mindestens eine Absorptionskolonne (16), umfassend einen Einlass für körniges Natriumhydroxid, einen Auslass für festes Natriumcarbonat und
   festes Natriumsulfat und/oder Natriumsulfit, einen Gaseinlass und einen Gasauslass,
   wobei der Gaseinlass so positioniert ist, dass Gas auf dem Weg vom Gaseinlass zum Gasauslass mit dem körnigen Natriumhydroxid in Kontakt kommt;
iv. Carbonataufbereitungsbereich, wobei der Carbonataufbereitungsbereich umfasst:
   a. mindestens einen Trockner (20); und
   b. mindestens einen Auffangbehälter für Natriumcarbonat und Natriumsulfat und/oder Natriumsulfit (28).

Punkt 19. System nach einem der Punkte 16 bis 18, dadurch gekennzeichnet, dass das Modul i. ferner mindestens eine Heizeinheit zum Schmelzen von Natrium, mindestens eine Heizeinheit zum Erhitzen von Wasser und/oder mindestens eine Filteranlage zum Filtern von Wasser umfasst.

Punkt 20. System nach einem der Punkte 16 bis 19, dadurch gekennzeichnet, dass das Modul iii. ferner mindestens eine Messeinheit, die dazu eingerichtet ist, kontinuierlich CO₂ zu messen und/oder mindestens eine Heizeinheit zum Erhitzen von Natriumhydroxid und/oder mindestens eine Pumpe umfasst, die dazu eingerichtet ist, Natriumcarbonat und gegebenenfalls Natriumsulfat und/oder Natriumsulfit abzupumpen, beispielsweise in eine Vakuumröhre mit Sieb.

Punkt 21. System nach einem der Punkte 16 bis 20, dadurch gekennzeichnet, dass das Modul iv. ferner mindestens eine Filtereinheit und/oder mindestens eine Kristallisationseinheit (18) für Natriumcarbonat und/oder Natriumsulfat/-sulfit umfasst.

Punkt 22. System nach einem der Punkte 16 bis 21, dadurch gekennzeichnet, dass der mindestens eine Trockner in Modul iv. mindestens eine Siebtrocknungseinheit und/oder Vakuumtrocknungseinheit ist.

Punkt 23. System nach einem der Punkte 16 bis 22, dadurch gekennzeichnet, dass das Modul iv. ferner Mittel umfasst, die dazu eingerichtet sind, bei der Trocknung erhaltenes Restwasser in Modul ii. rückzuführen.

Punkt 24. System nach einem der Punkte 16 bis 23, dadurch gekennzeichnet, dass die Absorptionskolonne (16) eine vertikale Kolonne ist, insbesondere eine vertikale Kolonne, an der sich der Natriumhydroxid-Einlass im oberen Teil und der Gaseinlass im unteren Teil der Kolonne befindet, oder an der sich der Natriumhydroxid-Einlass und der Gaseinlass im oberen Teil der Kolonne befinden.

Punkt 25. System nach einem der Punkte 16 bis 24, dadurch gekennzeichnet, dass die Absorptionskolonne (16) eine vertikale Kolonne ist, an der sich der Natriumhydroxid-Einlass und der Gaseinlass im oberen Teil der Kolonne befinden und der Gaseinlass dazu eingerichtet ist, das Gas über eine Röhre oder Trompete mit Öffnungen zum Ausströmen von Gas oder Injektionsdüsen in die Kolonne einzubringen.

Punkt 26. System nach einem der Punkte 16 bis 25, dadurch gekennzeichnet, dass es in eine Anlage zur Herstellung von Glas oder Papier oder zum Raffinieren von Zucker integriert ist.

Punkt 27. System nach einem der Punkte 16 bis 26, dadurch gekennzeichnet, dass die einzelnen Module i., ii., iii. und/oder iv., insbesondere die Module ii. und iii. mehrfach vorhanden sind und dazu eingerichtet sind, parallel betrieben zu werden.

Punkt 28. Verfahren zur CO₂-neutralen oder CO₂-negativen Herstellung von Natriumcarbonat aus Natriumhydroxid in einer großtechnischen Anlage, umfassend die Schritte:
i. Inkontaktbringen von Natriumhydroxid (NaOH) mit Kohlenstoffdioxid (CO₂) in einem Reaktor;
ii. Abtrennen und Filtrieren des entstehenden Natriumcarbonats; und
iii. Kristallisation und/oder Trocknen des Natriumcarbonats;
dadurch gekennzeichnet, dass das Natriumhydroxid (a) bereits in verwertbarer Form vorliegt oder (b) in derselben Anlage aus elementarem Natrium und Wasser hergestellt wird.

Punkt 29. Verfahren zur CO₂-neutralen oder CO₂-negativen Herstellung von Natriumcarbonat und Natriumsulfat und/oder Natriumsulfit aus Natriumhydroxid in einer großtechnischen Anlage, umfassend die Schritte:
i. Inkontaktbringen von Natriumhydroxid (NaOH) mit Kohlenstoffdioxid (CO₂) und Schwefeloxiden (SOₓ) in einem Reaktor;
ii. Abtrennen und Filtrieren des entstehenden Natriumcarbonats und des entstehenden Natriumsulfats und/oder Natriumsulfits; und
iii. Kristallisation und/oder Trocknen des Natriumcarbonats und des Natriumsulfats und/oder Natriumsulfits;
dadurch gekennzeichnet, dass das Natriumhydroxid (a) bereits in verwertbarer Form vorliegt oder (b) in derselben Anlage aus elementarem Natrium und Wasser hergestellt wird.

Punkt 30. Verfahren nach einem der Punkte 28 bis 29, dadurch gekennzeichnet, dass der in Alternative (b) bei der Reaktion zwischen Natrium und Wasser entstehende Wasserstoff zur Bereitstellung mindestens eines Teils der benötigten thermischen Energie für mindestens einen der Schritte des Verfahrens, insbesondere Schritt ii. und/oder iii., vorgesehen ist.

Punkt 31. Verfahren nach einem der Punkte 28 bis 30, dadurch gekennzeichnet, dass die Herstellung von Wasserstoff dynamisch an die Energieerfordernisse von Schritt ii. und/oder iii., bevorzugt Schritt iii., angepasst wird.

Punkt 32. Verfahren nach einem der Punkte 28 bis 31, dadurch gekennzeichnet, dass die bei der Reaktion zwischen Natrium und Wasser entstehende thermische Energie zur Bereitstellung mindestens eines Teils der benötigten thermischen Energie für (a) mindestens einen der weiteren Schritte des Verfahrens, und/oder für (b) mindestens einen Bestandteil einer großtechnischen Anlage, insbesondere einer Glashütte, vorgesehen ist.

Punkt 33. Verfahren zur CO₂-neutralen Herstellung von Natriumcarbonat und gegebenenfalls Natriumsulfat und/oder Natriumsulfit in einer großtechnischen Anlage, wobei das Verfahren die Schritte umfasst:
i. Inkontaktbringen von Natriumhydroxid (NaOH) mit Kohlenstoffdioxid (CO₂) und gegebenenfalls Schwefeloxiden (SOₓ) in einem Reaktor;
ii. Abtrennen und Filtrieren des entstehenden Natriumcarbonats und gegebenenfalls Natriumsulfats und/oder Natriumsulfits; und
iii. Kristallisation und/oder Trocknen des Natriumcarbonats und gegebenenfalls Natriumsulfats und/oder Natriumsulfits;
dadurch gekennzeichnet, dass das CO₂ und gegebenenfalls SOₓ zumindest teilweise aus chemischen Reaktionen stammen, die innerhalb derselben Anlage durchgeführt werden.

Punkt 34. Verfahren nach Punkt 33, dadurch gekennzeichnet, dass die großtechnische Anlage dazu eingerichtet ist, einen Schmelzprozess für Natriumcarbonat und gegebenenfalls Natriumsulfat und/oder Natriumsulfit durchzuführen, insbesondere dadurch gekennzeichnet, dass die großtechnische Anlage eine Glashütte ist.

Punkt 35. Verfahren zur CO₂-neutralen Herstellung von Natriumcarbonat und gegebenenfalls Natriumsulfat und/oder Natriumsulfit in einer großtechnischen Anlage, die dazu eingerichtet ist, einen Schmelzprozess für Natriumcarbonat und gegebenenfalls Natriumsulfat und/oder Natriumsulfit durchzuführen, wobei das Verfahren die Schritte umfasst:
i. Inkontaktbringen von Natriumhydroxid (NaOH) mit Kohlenstoffdioxid (CO₂) und gegebenenfalls Schwefeloxiden (SOₓ) in einem Reaktor;
ii. Abtrennen und Filtrieren des entstehenden Natriumcarbonats und gegebenenfalls Natriumsulfats und/oder Natriumsulfits; und
iii. Kristallisation und/oder Trocknen des Natriumcarbonats und gegebenenfalls Natriumsulfats und/oder Natriumsulfits;
iv. Verarbeitung des Natriumcarbonats und gegebenenfalls Natriumsulfats und/oder Natriumsulfits in dem Schmelzprozess, wobei CO₂ aus dem Natriumcarbonat und gegebenenfalls SOₓ aus dem Natriumsulfat und/oder Natriumsulfit freigesetzt werden;
dadurch gekennzeichnet, dass das CO₂ und gegebenenfalls SOₓ aus Schritt iv. zumindest teilweise, bevorzugt im Wesentlichen vollständig dem Schritt i. zugeführt werden.

Punkt 36. Verfahren zur Reduktion von CO₂-Emissionen eines Abgasstroms, beispielsweise eines Rauchgasstroms einer großtechnischen Anlage, dadurch gekennzeichnet, dass das CO₂ durch Inkontaktbringen mit bevorzugt *in situ* hergestelltem wässrigen Natriumhydroxid (NaOH) absorbiert wird.

Punkt 37. Verfahren zur Reduktion von SOₓ-Emissionen eines Abgasstroms einer großtechnischen Anlage, dadurch gekennzeichnet, dass SOₓ durch Inkontaktbringen mit bevorzugt *in situ* hergestelltem wässrigen Natriumhydroxid (NaOH) absorbiert wird/werden.

Punkt 38. Verfahren zur Reduktion von CO₂-Emissionen und SOₓ-Emissionen eines Abgasstroms einer großtechnischen Anlage, dadurch gekennzeichnet, dass CO₂ und SOₓ durch Inkontaktbringen mit bevorzugt *in situ* hergestelltem wässrigen Natriumhydroxid (NaOH) absorbiert werden.

Punkt 39. Verfahren nach einem der Punkte 33 bis 38, dadurch gekennzeichnet, dass das Natriumhydroxid (a) bereits in verwertbarer Form vorliegt oder (b) in derselben Anlage aus elementarem Natrium und Wasser hergestellt wird.

Punkt 40. Verfahren nach einem der Punkte 1 bis 15, 28 bis 39, dadurch gekennzeichnet, dass das Natriumhydroxid im Schritt des Inkontaktbringens mit CO₂ als wässrige Lösung vorliegt.

Punkt 41. Verfahren nach einem der Punkte 1 bis 15, 28 bis 40, dadurch gekennzeichnet, dass CO₂ und NaOH im Gegenstrom in einer vertikalen Kolonne in Kontakt gebracht werden.

Punkt 42. Verfahren nach einem der Punkte 1 bis 15, 28 bis 41, dadurch gekennzeichnet, dass SOₓ und NaOH im Gegenstrom in einer vertikalen Kolonne in Kontakt gebracht werden.

Punkt 43. Verfahren nach einem der Punkte 1 bis 15, 28 bis 42, dadurch gekennzeichnet, dass das CO₂ und ggf. SOₓ aus der Verbrennung eines fossilen Energieträgers stammen.

Punkt 44. Verfahren nach einem der Punkte 1 bis 15, 28 bis 43, dadurch gekennzeichnet, dass das CO₂ und ggf. SOₓ Bestandteil eines Abgasstroms einer großtechnischen Anlage, insbesondere einer Glashütte, ist.

Punkt 45. Verfahren nach einem der Punkte 1 bis 15, 28 bis 44, dadurch gekennzeichnet, dass das CO₂ und ggf. SOₓ Bestandteil eines Abgasstroms einer großtechnischen Anlage, insbesondere einer Glashütte, ist, wobei das CO₂ und ggf. SOₓ aus dem materialbedingten chemischen Verarbeitungsprozess stammt, insbesondere dem einer Glasschmelze einer Glashütte.

Punkt 46. Verwendung des Verfahrens nach einem der Punkte 1 bis 15, 28 bis 45, oder des Systems nach einem der Punkte 16 bis 27, zur Reduktion von CO₂-Emissionen in der Glasherstellung.

Punkt 47. Verwendung des Verfahrens nach einem der Punkte 1 bis 15, 28 bis 45, oder des Systems nach einem der Punkte 16 bis 27, zur Reduktion von SOₓ-Emissionen oder von CO₂- und SOₓ-Emissionen in der Glasherstellung.

Punkt 48. System zur CO₂-neutralen Herstellung von Natriumcarbonat und gegebenenfalls Natriumsulfat und/oder Natriumsulfit in einer großtechnischen Anlage mit einem Schmelzprozess für Natriumcarbonat und gegebenenfalls Natriumsulfat und/oder Natriumsulfit, umfassend die untereinander verbundenen Module:
i. Lagerbereich umfassend mindestens einen Lagerbehälter für Natriumhydroxid (14);
ii. Gasaufbereitungsbereich, wobei der Gasaufbereitungsbereich umfasst:
   mindestens eine Absorptionskolonne (16), umfassend einen Einlass für Natriumhydroxid, einen Auslass für Natriumcarbonat und gegebenenfalls Natriumsulfat und/oder Natriumsulfit, einen Gaseinlass und einen Gasauslass,
   wobei der Gaseinlass so positioniert ist, dass Gas auf dem Weg vom Gaseinlass zum Gasauslass mit dem wässrigen Natriumhydroxid in Kontakt kommt;
iii. Carbonataufbereitungsbereich, wobei der Carbonataufbereitungs-bereich umfasst:
   a. mindestens einen Trockner (20); und
   b. mindestens einen Auffangbehälter für Natriumcarbonat und gegebenenfalls Natriumsulfat und/oder Natriumsulfit (28);
iv. Schmelzwanne, die dazu eingerichtet ist, Natriumcarbonat und gegebenenfalls Natriumsulfat und/oder Natriumsulfit zu schmelzen;
v. Auffangvorrichtungen, die dazu eingerichtet sind, beim Schmelzen aus dem Natriumcarbonat freigesetztes CO₂ und gegebenenfalls aus dem Natriumsulfat und/oder Natriumsulfit freigesetztes SOₓ aufzufangen;
vi. Mittel, die dazu eingerichtet sind, Gase aus den Auffangvorrichtungen, insbesondere CO₂ und gegebenenfalls SOₓ zu dem Gasaufbereitungsbereich zurückzuführen.

Punkt 49. System nach Punkt 48, dadurch gekennzeichnet, dass Komponenten oder Aspekte aus einem oder mehreren der Punkte 20-27 Anwendung finden

## Patentansprüche

1. Verfahren zur Herstellung von Natriumcarbonat oder von Natriumcarbonat und Natriumsulfat und/oder Natriumsulfit, umfassend die Schritte:
i. Bereitstellen von elementarem Natrium (Na) in einem ersten Behälter;
ii. Inkontaktbringen des Natriums mit Wasser;
iii. Abtrennen des in Schritt ii. entstandenen gasförmigen elementaren Wasserstoffs (H₂);
iv. Überführen des abgetrennten gasförmigen Wasserstoffs in einen geeigneten Auffangbehälter;
v. Überführen der verbleibenden Zusammensetzung aus dem ersten Behälter in mindestens einen weiteren Behälter und gegebenenfalls Abtrennen des in Schritt ii. entstandenen Natriumhydroxids (NaOH);
vi. Inkontaktbringen des Natriumhydroxids mit Kohlenstoffdioxid (CO₂) oder Inkontaktbringen des Natriumhydroxids mit Kohlenstoffdioxid (CO₂) und Schwefeloxiden (SOₓ);
vii. Abtrennen und Filtrieren des entstehenden Natriumcarbonats und gegebenenfalls des entstehenden Natriumsulfats und/oder Natriumsulfits; und
viii. Kristallisation und/oder Trocknen des Natriumcarbonats und gegebenenfalls Natriumsulfats und/oder Natriumsulfits.

2. Verfahren nach Anspruch 1, **dadurch gekennzeichnet, dass** das elementare Natrium in flüssiger Form bereitgestellt wird.

3. Verfahren nach einem der vorhergehenden Ansprüche, **dadurch gekennzeichnet, dass** die in Schritt ii. erzeugte thermische Energie zur Bereitstellung mindestens eines Teils der benötigten thermischen Energie für (a) mindestens einen der weiteren Schritte des Verfahrens, insbesondere Schritt vii. und/oder viii., und/oder (b) mindestens einen Bestandteil einer großtechnischen Anlage, insbesondere einer Glashütte, vorgesehen ist.

4. System (10) zur Herstellung von Natriumcarbonat oder von Natriumcarbonat und Natriumsulfat und/oder Natriumsulfit aus elementarem Natrium, umfassend die untereinander verbundenen Module:
i. Lagerbereich, wobei der Lagerbereich umfasst:
a. mindestens einen Lagerbehälter für elementares Natrium (26);
und
b. mindestens einen Lagerbehälter für Wasser (24);
ii. Reaktionsbereich (12), wobei der Reaktionsbereich (12) umfasst:
a. mindestens einen heizbaren Reaktor, umfassend mindestens zwei Einlässe und mindestens einen Auslass;
b. mindestens eine Vorrichtung zum steuerbaren Einbringen von Wasser in den Reaktor;
wobei in dem Reaktor elementares Natrium mit Wasser umgesetzt wird, wobei gasförmiger elementarer Wasserstoff erzeugt wird;
c. mindestens einen Gas-Flüssigkeits-Abscheider;
d. mindestens einen Auffangbehälter für Natriumhydroxid (14);
iii. Gasaufbereitungsbereich, wobei der Gasaufbereitungsbereich umfasst:
mindestens eine Absorptionskolonne (16), umfassend einen Einlass für wässriges Natriumhydroxid, einen Auslass für wässriges Natriumcarbonat und gegebenenfalls wässriges Natriumsulfat und/oder Natriumsulfit, einen Gaseinlass und einen Gasauslass,
wobei der Gaseinlass so positioniert ist, dass Gas auf dem Weg vom Gaseinlass zum Gasauslass mit dem wässrigen Natriumhydroxid in Kontakt kommt;
iv. Carbonataufbereitungsbereich, wobei der Carbonataufbereitungsbereich umfasst:
a. mindestens einen Trockner (20); und
b. mindestens einen Auffangbehälter für Natriumcarbonat und gegebenenfalls Natriumsulfat und/oder Natriumsulfit (28).

5. System nach Anspruch 4, **dadurch gekennzeichnet, dass** das Modul i. ferner mindestens eine Heizeinheit zum Schmelzen von Natrium und/oder mindestens eine Heizeinheit zum Erhitzen von Wasser und/oder mindestens eine Filteranlage zum Filtern von Wasser umfasst.

6. System nach Anspruch 4 oder 5, **dadurch gekennzeichnet, dass** das Modul iv. ferner mindestens eine Filtereinheit und/oder mindestens eine Kristallisationseinheit (18) für Natriumcarbonat und gegebenenfalls Natriumsulfat und/oder Natriumsulfit umfasst.

7. System nach einem der Ansprüche 4 bis 6, **dadurch gekennzeichnet, dass** es in eine Anlage zur Herstellung von Glas oder Papier oder zum Raffinieren von Zucker integriert ist.

8. Verfahren zur CO₂-neutralen oder CO₂-negativen Herstellung von Natriumcarbonat und gegebenenfalls Natriumsulfat und/oder Natriumsulfit aus Natriumhydroxid in einer großtechnischen Anlage, umfassend die Schritte:
i. Inkontaktbringen von Natriumhydroxid (NaOH) mit Kohlenstoffdioxid (CO₂) und gegebenenfalls Schwefeloxiden (SOₓ) in einem Reaktor;
ii. Abtrennen und Filtrieren des entstehenden Natriumcarbonats und gegebenenfalls Natriumsulfats und/oder Natriumsulfits; und
iii. Kristallisation und/oder Trocknen des Natriumcarbonats und gegebenenfalls Natriumsulfats und/oder Natriumsulfits;
**dadurch gekennzeichnet, dass** das Natriumhydroxid (a) bereits in verwertbarer Form vorliegt oder (b) in derselben Anlage aus elementarem Natrium und Wasser hergestellt wird.

9. Verfahren zur CO₂-neutralen Herstellung von Natriumcarbonat und gegebenenfalls Natriumsulfat und/oder Natriumsulfit in einer großtechnischen Anlage, die dazu eingerichtet ist, einen Schmelzprozess für Natriumcarbonat und gegebenenfalls Natriumsulfat und/oder Natriumsulfit durchzuführen, wobei das Verfahren die Schritte umfasst:
i. Inkontaktbringen von Natriumhydroxid (NaOH) mit Kohlenstoffdioxid (CO₂) und gegebenenfalls Schwefeloxiden (SOₓ) in einem Reaktor;
ii. Abtrennen und Filtrieren des entstehenden Natriumcarbonats und gegebenenfalls Natriumsulfats und/oder Natriumsulfits; und
iii. Kristallisation und/oder Trocknen des Natriumcarbonats und gegebenenfalls Natriumsulfats und/oder Natriumsulfits;
iv. Verarbeitung des Natriumcarbonats und gegebenenfalls Natriumsulfats und/oder Natriumsulfits in dem Schmelzprozess, wobei CO₂ aus dem Natriumcarbonat und gegebenenfalls SOₓ aus dem Natriumsulfat und/oder Natriumsulfit freigesetzt werden;
**dadurch gekennzeichnet, dass** das CO₂ und gegebenenfalls SOₓ aus Schritt iv. zumindest teilweise, bevorzugt im Wesentlichen vollständig dem Schritt i. zugeführt werden.

10. Verfahren zur Reduktion von CO₂-Emissionen eines Abgasstroms, beispielsweise eines Rauchgasstroms einer großtechnischen Anlage, und/oder von SOₓ-Emissionen eines Abgasstroms einer großtechnischen Anlage, **dadurch gekennzeichnet, dass** das CO₂ und/oder SOₓ durch Inkontaktbringen mit bevorzugt *in situ* hergestelltem wässrigen Natriumhydroxid (NaOH) absorbiert wird.

11. Verfahren nach einem der Ansprüche 1 bis 3, 8 bis 10, **dadurch gekennzeichnet, dass** das Natriumhydroxid im Schritt des Inkontaktbringens mit CO₂ und/oder SOₓ als wässrige Lösung vorliegt.

12. Verfahren nach einem der Ansprüche 1 bis 3, 8 bis 11, **dadurch gekennzeichnet, dass** CO₂ und/oder SOₓ und NaOH im Gegenstrom in einer vertikalen Kolonne in Kontakt gebracht werden.

13. Verfahren nach einem der Ansprüche 1 bis 3, 8 bis 12, **dadurch gekennzeichnet, dass** das CO₂ Bestandteil eines Abgasstroms einer großtechnischen Anlage ist, wobei das CO₂ insbesondere aus dem materialbedingten chemischen Verarbeitungsprozess stammt, insbesondere dem einer Glasschmelze einer Glashütte.

14. Verwendung des Verfahrens nach einem der Ansprüche 1 bis 3, 8 bis 13, oder des Systems nach einem der Ansprüche 4 bis 7, zur Reduktion von CO₂-Emissionen in der Glasherstellung.

15. System zur CO₂-neutralen Herstellung von Natriumcarbonat und gegebenenfalls Natriumsulfat und/oder Natriumsulfit in einer großtechnischen Anlage mit einem Schmelzprozess für Natriumcarbonat und gegebenenfalls Natriumsulfat und/oder Natriumsulfit, umfassend die untereinander verbundenen Module:
i. Lagerbereich umfassend mindestens einen Lagerbehälter für Natriumhydroxid (14);
ii. Gasaufbereitungsbereich, wobei der Gasaufbereitungsbereich umfasst:
mindestens eine Absorptionskolonne (16), umfassend einen Einlass für Natriumhydroxid, einen Auslass für Natriumcarbonat und gegebenenfalls Natriumsulfat und/oder Natriumsulfit, einen Gaseinlass und einen Gasauslass,
wobei der Gaseinlass so positioniert ist, dass Gas auf dem Weg vom Gaseinlass zum Gasauslass mit dem wässrigen Natriumhydroxid in Kontakt kommt;
iii. Carbonataufbereitungsbereich, wobei der Carbonataufbereitungsbereich umfasst:
a. mindestens einen Trockner (20); und
b. mindestens einen Auffangbehälter für Natriumcarbonat und gegebenenfalls Natriumsulfat und/oder Natriumsulfit (28);
iv. Schmelzwanne, die dazu eingerichtet ist, Natriumcarbonat und gegebenenfalls Natriumsulfat und/oder Natriumsulfit zu schmelzen;
v. Auffangvorrichtungen, die dazu eingerichtet sind, beim Schmelzen aus dem Natriumcarbonat freigesetztes CO₂ und gegebenenfalls aus dem Natriumsulfat und/oder Natriumsulfit freigesetztes SOₓ aufzufangen;
vi. Mittel, die dazu eingerichtet sind, Gase aus den Auffangvorrichtungen, insbesondere CO₂ und gegebenenfalls SOₓ zu dem Gasaufbereitungsbereich zurückzuführen.
